(19) Europäisches Patentamt
European Patent Office
Office européen des brevets

(11) EP 2 274 786 B1

(12) **FASCICULE DE BREVET EUROPEEN**

(45) Date de publication et mention de la délivrance du brevet:
**04.11.2015 Bulletin 2015/45**

(21) Numéro de dépôt: **09742290.1**

(22) Date de dépôt: **09.04.2009**

(51) Int Cl.:
***H01M 8/16*** $^{(2006.01)}$ ***H01M 8/20*** $^{(2006.01)}$

(86) Numéro de dépôt international:
**PCT/FR2009/050639**

(87) Numéro de publication internationale:
**WO 2009/136092 (12.11.2009 Gazette 2009/46)**

(54) **BIOPILE A RENDEMENT AMELIORE**

BIOBATTERIE MIT ERHÖHTER LEISTUNG

BIO-BATTERY WITH ENHANCED YIELD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **09.04.2008 FR 0852383**

(43) Date de publication de la demande:
**19.01.2011 Bulletin 2011/03**

(73) Titulaires:
- **Université Joseph Fourier
38041 Grenoble Cedex 9 (FR)**
- **Centre National de la Recherche Scientifique
75794 Paris Cedex 16 (FR)**
- **Institut National des Sciences Appliquées de Toulouse
31077 Toulouse Cedex 4 (FR)**

(72) Inventeurs:
- **PELLISSIER, Aymeric
38360 Sassenage (FR)**
- **GONDRAN, Chantal
F-38000 Grenoble (FR)**
- **LENOUVEL, François
F-38100 Grenoble (FR)**
- **CINQUIN, Philippe
F-38330 Saint Nazaire les Eymes (FR)**
- **COSNIER, Serge
F-38920 Crolles (FR)**
- **MATHE, Stéphane
F-31500 Toulouse (FR)**

(74) Mandataire: **Thibon, Laurent et al
Cabinet Beaumont
1, rue Champollion
38000 Grenoble (FR)**

(56) Documents cités:
**WO-A-03/067697 WO-A-03/106966
JP-A- 2006 331 706 US-A1- 2005 049 313**

- **BULLEN ET AL: "Biofuel cells and their development" BIOSENSORS & BIOELECTRONICS, ELSEVIER SCIENCE PUBLISHERS, BARKING, GB, vol. 21, no. 11, 15 mai 2006 (2006-05-15), pages 2015-2045, XP005365031 ISSN: 0956-5663**
- **BRUNEL ET AL: "Oxygen transport through laccase biocathodes for a membrane-less glucose/O2 biofuel cell" ELECTROCHEMISTRY COMMUNICATION, ELSEVIER, AMSTERDAM, NL, vol. 9, no. 2, 7 février 2007 (2007-02-07), pages 331-336, XP005878776 ISSN: 1388-2481 cité dans la demande**
- **HE Z ET AL: "Effect of electrolyte pH on the rate of the anodic and cathodic reactions in an air-cathode microbial fuel cell" BIOELECTROCHEMISTRY, ELESEVIER, AMSTERDAM, NL, vol. 74, no. 1, 1 novembre 2008 (2008-11-01), pages 78-82, XP025589630 ISSN: 1567-5394 [extrait le 2008-08-07]**
- **BEHERA M ET AL: "Performance of microbial fuel cell in response to change in sludge loading rate at different anodic feed pH" BIORESOURCE TECHNOLOGY, ELSEVIER, GB, vol. 100, no. 21, 1 novembre 2009 (2009-11-01), pages 5114-5121, XP026321207 ISSN: 0960-8524 [extrait le 2009-06-17]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 274 786 B1

## Description

Domaine de l'invention

La présente invention concerne les biopiles (en anglais biofuel cells), c'est-à-dire des piles à combustible qui utilisent des enzymes ou des microorganismes (bactéries, levures) pour convertir en électricité une partie de l'énergie disponible dans un substrat biodégradable.

Exposé de l'art antérieur

De façon générale, une biopile est constituée d'une anode comportant une électrode placée au sein d'une chambre contenant des enzymes et un substrat biodégradable, tel que le glucose, l'acétate, etc. Les enzymes assurent la transformation du substrat en $CO_2$, en protons et en électrons, ces derniers étant capturés par l'électrode anodique de la biopile. Afin d'améliorer le transfert des électrons vers l'électrode anodique, des médiateurs redox peuvent être utilisés. Une biopile comprend également une cathode au niveau de laquelle un accepteur d'électrons est réduit. A titre d'exemple, la cathode comprend une électrode placée dans une chambre alimentée en air, le dioxygène étant réduit en eau. Des réactions de réduction impliquant des enzymes et des médiateurs redox peuvent également être prévues à la cathode. Les électrodes de la biopile sont connectées à une charge, tandis qu'un pont ionique assure le transfert d'ions entre l'anode et la cathode.

Les biopiles proposées actuellement par la plupart des groupes de recherche diffèrent pour l'essentiel par le choix du substrat biodégradable, des enzymes qui participent à la dégradation du substrat et de l'utilisation ou non de médiateurs redox à la cathode et/ou à l'anode.

Un exemple de biopile est décrit dans la publication "Oxygen transport through laccase biocathodes for a membrane-less glucose/$O_2$ biofuel cell" aux noms de L. Brunel, J. Denele, K. Servat, K. B. Kokoh, C. Jolivalt, C. Innocent, M. Cretin, M. Rolland, S. Tingry (Electrochemistry Communications 9 331-336 2007). Dans cet exemple de biopile, à la cathode, l'oxygène est réduit en eau par l'enzyme laccase en présence du médiateur 2,2'-azinobis-(3-ethylbenzo-thiazoline-6-sulfonate) ou ABTS. A l'anode, le glucose est oxydé en gluconolactone par l'enzyme glucose oxydase (GOD) en présence du médiateur 8-hydroxyquinoline-5-sulfonicacidhydrate ou HQS.

A titre d'exemple, si on appelle GODox et GODred respectivement la forme oxydée et réduite de l'enzyme glucose oxydase, et Medox et Medred respectivement la forme oxydée et la forme réduite du médiateur redox, on observe les réactions suivantes à l'anode :

$$\textbf{Glucose + GODox} \rightarrow \textbf{Gluconolactone+GODred} \qquad (1)$$

$$\textbf{GODred + Medox} \rightarrow \textbf{GODox + Medred} \qquad (2)$$

$$\textbf{Medred} \rightarrow \textbf{Medox + 2e}^- \qquad (3)$$

la réaction (3) traduisant le transfert des électrons vers l'électrode de l'anode.

Un inconvénient des biopiles proposées actuellement est qu'une réaction parasite peut se produire au niveau de l'anode mettant en oeuvre du dioxygène qui réagit avec l'enzyme et empêche le transfert d'électrons vers l'électrode de l'anode. Dans l'exemple précédent, la réaction (2) se trouve concurrencée par la réaction suivante :

$$\textbf{GODred+O}_2 \rightarrow \textbf{GODox+H}_2\textbf{O}_2 \qquad (4)$$

de sorte que la réaction (3) est court-circuitée.

Il est alors nécessaire de prévoir des dispositifs particuliers pour éviter que de l'oxygène n'atteigne l'anode, ce qui conduit à l'obtention de systèmes complexes.

Un autre inconvénient des biopiles proposées actuellement est qu'il est nécessaire de prévoir une immobilisation des enzymes et du médiateur redox sur une surface pour que la réaction (2) puisse se dérouler convenablement. L'activité des enzymes est donc limitée à une surface, ce qui rend difficile l'obtention d'une biopile ayant un rendement élevé.

Le document WO03106966 décrit une biopile comprenant deux électrodes avec chacune des couples rédox et séparées par une membrane sélective ionique.

Résumé de l'invention

La présente invention prévoit une biopile selon la revendication 1 et dans laquelle les réactions mises en oeuvre

lors du fonctionnement de la biopile ne sont pas perturbées par la présence de dioxygène.

Selon un autre objet de la présente invention, la biopile peut être facilement implantée dans le corps humain.

Selon un autre objet de la présente invention, la biopile peut être mise en oeuvre avec une large gamme de couples redox.

Selon un autre objet de la présente invention, la biopile n'utilise pas de matériaux polluants tels que le platine, le nickel, etc.

Ainsi, un aspect de la présente invention prévoit une pile comprenant des première et seconde chambres contenant un solvant et séparées par une paroi perméable au solvant. Une première électrode est disposée au moins en partie dans la première chambre. Une seconde électrode est disposée au moins en partie dans la seconde chambre. Un premier couple redox est disposé dans la première chambre au contact du solvant et comprend un premier oxydant et un premier réducteur participant à des premières réactions d'oxydoréduction conduisant à l'échange d'électrons avec la première électrode. Un second couple redox est disposé dans la seconde chambre au contact du solvant et comprend un second oxydant et un second réducteur participant à des deuxièmes réactions d'oxydoréduction conduisant à l'échange d'électrons avec la seconde électrode. Ladite paroi est imperméable aux premier et second couples redox. Des premières enzymes ou des premiers microorganismes sont disposés dans la première chambre ou dans la seconde chambre et favorisent des troisièmes réactions d'oxydoréduction différentes des premières et deuxièmes réactions d'oxydoréduction conduisant à la transformation d'une première substance pour fournir une seconde substance comprenant des espèces acides ou basiques dans le solvant de la première et/ou seconde chambre, d'où il résulte une différence de potentiels entre les potentiels redox des premier et second couples redox.

Selon l'invention la paroi empêche, ou au moins ralentit, le passage des ions hydronium et/ou hydroxyle, la pile comprenant un premier dispositif de variation du pH dans la première chambre, les premières enzymes ou les premiers microorganismes étant adaptés à transformer la première substance pour fournir dans le solvant de la première chambre des ions hydronium ou hydroxyle, d'où il résulte une différence de potentiel entre les potentiels redox des premier et second couples redox.

Selon un exemple de réalisation, le premier oxydant est une quinone et le premier réducteur est une forme réduite de ladite quinone.

Selon un exemple de réalisation, la première substance est le D-glucose et les premières enzymes sont les enzymes glucose oxydase adaptées à entraîner la production d'ions hydronium par oxydation du D-glucose.

Selon un exemple de réalisation, la première substance est le L-glucose et les premières enzymes sont les enzymes L-fucose déshydrogénase adaptées à entraîner la production d'ions hydronium par oxydation du L-glucose.

Selon un exemple de réalisation, la première substance est l'urée et les premières enzymes sont les enzymes uréase adaptées à entraîner la production d'ions hydroxyle par dégradation de l'urée.

Selon un exemple de réalisation, les premier et second couples redox sont identiques.

Selon un exemple de réalisation, la première chambre comprend une membrane perméable au solvant, non perméable aux premières enzymes ou aux premiers microorganismes et délimitant un volume du solvant dans lequel est plongée la première électrode, le premier couple redox étant dissous dans ledit volume, les premières enzymes ou les premiers microorganismes étant disposés à l'extérieur dudit volume.

Selon un exemple de réalisation, le premier couple redox est disposé au niveau d'une phase solide ou gélifiée entourant au moins partiellement la première électrode.

Selon un exemple de réalisation, le premier dispositif de variation du pH dans la première chambre comprend les premières enzymes ou les premiers microorganismes adaptés à transformer la première substance pour fournir dans le solvant de la première chambre des ions hydronium. La pile comprend un deuxième dispositif de variation du pH dans la seconde chambre comprenant des deuxièmes enzymes ou des deuxièmes microorganismes adaptés à transformer une troisième substance pour fournir dans le solvant de la seconde chambre des ions hydroxyle.

Selon un exemple de réalisation, la pile comprend un troisième dispositif de variation du pH dans la première chambre comprenant des troisièmes enzymes ou des troisièmes microorganismes, éventuellement identiques aux deuxièmes enzymes ou aux deuxièmes microorganismes, adaptés à transformer une quatrième substance, éventuellement identique à la troisième substance, pour fournir dans le solvant de la première chambre des ions hydroxyle. La pile comprend, en outre, un quatrième dispositif de variation du pH dans la seconde chambre comprenant des quatrièmes enzymes ou des quatrièmes microorganismes, éventuellement identiques aux premières enzymes ou aux premiers microorganismes, adaptés à transformer une cinquième substance, éventuellement identique à la première substance, pour fournir dans le solvant de la seconde chambre des ions hydronium. La pile comprend, en outre, un dispositif adapté à actionner les premier et deuxième dispositifs tout en bloquant les troisième et quatrième dispositifs et à actionner les troisième et quatrième dispositifs tout en bloquant les premier et deuxième dispositifs.

Selon un exemple de réalisation, la pile comporte un dispositif de régénération du premier oxydant ou du premier réducteur comprenant des cinquièmes enzymes ou des cinquièmes microorganismes adaptés, dans le cas où les premières réactions comprennent la réduction du premier oxydant en le premier réducteur, à transformer le premier réducteur en le premier oxydant et, dans le cas où les premières réactions comprennent l'oxydation du premier réducteur

en le premier oxydant, à transformer le premier oxydant en le premier réducteur.

Selon un exemple de réalisation, les cinquièmes enzymes sont des enzymes du type tyrosinase ou peroxydase adaptées à favoriser l'oxydation de la forme réduite de ladite quinone en ladite quinone avec consommation de dioxygène ou d'eau oxygénée.

Selon un exemple de réalisation, la pile comprend un passage reliant la première chambre à la seconde chambre, le passage étant muni d'une vanne à ouverture commandable.

Selon un exemple de réalisation, la pile comprend des sixièmes enzymes ou des sixièmes microorganismes adaptés, dans le cas où les premières réactions comprennent la réduction du premier oxydant en le premier réducteur, à transformer le premier réducteur en le premier oxydant avec consommation de la deuxième substance, et, dans le cas où les premières réactions comprennent l'oxydation du premier réducteur en le premier oxydant, à transformer le premier oxydant en le premier réducteur avec consommation de la seconde substance.

Selon un exemple de réalisation, le premier oxydant est l'ubiquinone et le premier réducteur est l'ubiquinol, la première substance étant le glucose et la deuxième substance étant l'eau oxygénée. Les premières enzymes sont les enzymes glucose oxydase adaptées à entraîner la production d'eau oxygénée à partir du glucose. Le second oxydant est une quinone et le second réducteur est une forme réduite de ladite quinone. Les sixièmes enzymes correspondent aux enzymes peroxydase adaptées à oxyder la forme réduite de ladite quinone en ladite quinone avec consommation d'eau oxygénée.

Selon un exemple de réalisation, le premier oxydant est le déhydroascorbate et le premier réducteur est l'ascorbate, la première substance étant le glucose et la deuxième substance étant l'eau oxygénée. Les premières enzymes sont les enzymes glucose oxydase adaptées à entraîner la production d'eau oxygénée à partir du glucose. Le second oxydant est une quinone et le second réducteur est une forme réduite de ladite quinone. Les sixièmes enzymes correspondent aux enzymes peroxydase adaptées à oxyder la forme réduite de ladite quinone en ladite quinone avec consommation d'eau oxygénée.

## Brève description des dessins

Ces objets, caractéristiques et avantages, ainsi que d'autres seront exposés en détail dans la description suivante d'exemples de réalisation particuliers faite à titre non-limitatif en relation avec les figures jointes parmi lesquelles :

les figures 1 à 6 représentent, de façon schématique, des exemples de réalisation d'une biopile selon l'invention ;
la figure 7 représente, de façon schématique, un exemple de réalisation d'un élément particulier de la biopile de la figure 4 ; et
les figures 8 et 9 représentent, de façon schématique, d'autres exemples de réalisation d'une biopile selon l'invention.

## Description détaillée

Par souci de clarté, de mêmes éléments ont été désignés par de mêmes références aux différentes figures.

Dans une biopile classique, les électrons capturés par l'électrode anodique sont produits directement à partir de l'oxydation d'un substrat biodégradable par une enzyme (un médiateur redox jouant éventuellement le rôle d'interface avec l'électrode).

Le principe de la biopile selon la présente invention consiste à utiliser la réaction de dégradation du substrat par l'enzyme ou par le microorganisme, non plus directement pour la production des électrons capturés par l'électrode anodique, mais pour favoriser l'établissement ou le maintien d'une différence de potentiels entre les électrodes anodique et cathodique.

Selon un exemple de réalisation d'une biopile selon l'invention, on utilise la dégradation du substrat pour obtenir une différence de pH entre l'anode et la cathode et on utilise à l'anode et/ou à la cathode, un ou plusieurs couples redox dont les potentiels redox varient en fonction du pH. En particulier, le même couple redox peut être utilisé à l'anode et à la cathode. La variation de pH entre l'anode et la cathode de la biopile se traduit par l'obtention d'une différence de potentiels entre les électrodes de la biopile.

Selon un autre exemple de réalisation d'une biopile selon l'invention, on utilise, en outre, à l'anode et/ou à la cathode, un où plusieurs couples redox dont les potentiels redox varient en fonction des concentrations en solution de l'oxydant et du réducteur du couple redox. On utilise alors la réaction de dégradation du substrat par l'enzyme ou le microorganisme pour favoriser, pour au moins un couple redox, le maintien d'une forte différence entre la concentration de l'oxydant et la concentration du réducteur du couple de façon à obtenir une différence de potentiels entre les électrodes de la biopile.

Selon un autre exemple de réalisation d'une biopile selon l'invention, on utilise, en outre, des couples redox différents à l'anode et à la cathode de sorte qu'une différence de potentiels est normalement présente entre les électrodes cathodique et anodique. On utilise alors la réaction de dégradation du substrat par l'enzyme ou le microorganisme pour

favoriser la régénération des espèces des couples redox pour assurer la pérennité des réactions d'oxydoréduction à l'anode et à la cathode.

La pile à combustible selon la présente invention est une biopile dans la mesure où la différence de potentiels entre les électrodes anodique et cathodique met en oeuvre une réaction impliquant la dégradation d'un substrat par une enzyme ou un microorganisme. En outre, la réaction de dégradation du substrat par l'enzyme ou le microorganisme n'intervenant plus pour fournir directement les électrons capturés par l'électrode anodique, il n'est plus nécessaire d'isoler l'anode du dioxygène. Ceci permet de simplifier la réalisation de la biopile. En outre, étant donné qu'il n'y a pas de connexion entre l'enzyme, ou le microorganisme, et le couple redox participant à la production d'électrons capturés à l'électrode anodique, il y a davantage de liberté quant au choix du couple redox. De plus, dans une biopile classique, il est nécessaire d'immobiliser les enzymes et le médiateur pour que les réactions qui conduisent à la production d'électrons se déroulent de façon convenable. L'activité des enzymes est donc limitée à une surface. Dans les exemples de réalisation de biopiles selon la présente invention, les enzymes ou les microorganismes ne participent pas directement à la production d'électrons et ils peuvent être dispersés en solution. L'activité des enzymes ou des microorganismes s'étend alors dans un volume et n'est plus limitée à une surface, ce qui permet d'améliorer le rendement de la biopile.

Des exemples de réalisation de biopiles selon l'invention vont maintenant être décrits dans le cas où l'on utilise des couples redox dont les potentiels redox varient en fonction du pH.

On appelle $Ox_1/Red_1$ le couple redox utilisé au niveau de la cathode de la biopile. Le potentiel redox $E_1$ du couple $Ox_1/Red_1$ varie en fonction du pH à la cathode, appelé $pH_1$. La demi-réaction électronique associée au couple redox $Ox_1/Red_1$ est la suivante :

$$Ox_1 + ne^- + qH^+ = Red_1 + \frac{q}{2}H_2O \qquad (5)$$

où n et q sont des entiers. Le potentiel redox $E_1$ du couple $Ox_1/Red_1$, donné par la loi de Nernst, s'écrit de la façon suivante :

$$E_1 = E_1^\circ - \frac{q \cdot R \cdot T \cdot \ln 10}{n \cdot F} pH_1 + \frac{R \cdot T \cdot \ln 10}{n \cdot F} \log\left(\frac{[Ox_1]}{[Red_1]}\right) \qquad (6)$$

où $E_1$ est le potentiel standard du couple redox $Ox_1/Red_1$, R est la constante des gaz parfaits, F est le nombre de Faraday et T est la température absolue.

On appelle $Ox_2/Red_2$ le couple redox utilisé au niveau de l'anode de la biopile. Le potentiel redox $E_2$ du couple $Ox_2/Red_2$ varie en fonction du pH à l'anode, appelé $pH_2$. La demi-réaction électronique associée au couple redox $Ox_2/Red_2$ est la suivante :

$$Ox_2 + n'e^- + q'H^+ = Red_2 + \frac{q'}{2}H_2O \qquad (7)$$

où n' et q' sont des entiers. Le potentiel redox $E_2$ du couple $Ox_2/Red_2$, donné par la loi de Nernst, s'écrit de la façon suivante :

$$E_2 = E_2^\circ - \frac{q' \cdot R \cdot T \cdot \ln 10}{n' \cdot F} pH_2 + \frac{R \cdot T \cdot \ln 10}{n' \cdot F} \log\left(\frac{[Ox_2]}{[Red_2]}\right) \qquad (8)$$

où $E_2$ est le potentiel standard du couple redox $Ox_2/Red_2$.

La différence de potentiels ΔE entre les électrodes de la biopile est égale à :

$$\begin{aligned} \Delta E &= E_1 - E_2 \qquad (9) \\ &= E_1^\circ - E_2^\circ - \frac{R \cdot T \cdot \ln 10}{F}\left(\frac{q}{n} pH_1 - \frac{q'}{n'} pH_2 - \frac{1}{n}\log\left(\frac{[Ox_1]}{[Red_1]}\right) - \frac{1}{n'}\log\left(\frac{[Red_2]}{[Ox_2]}\right)\right) \end{aligned}$$

Dans le cas où les entiers n, q, n' et q' sont égaux à l'unité, et en considérant que les concentrations sont initialement égales et varient peu, la relation (9) devient :

$$\Delta E = E_1^\circ - E_2^\circ - \frac{R \cdot T \cdot \ln 10}{F}\left(pH_1 - pH_2 - \log\left(\frac{[Ox_1][Red_2]}{[Red_1][Ox_2]}\right)\right) \qquad (10)$$

La présente invention prévoit de favoriser au moins dans l'une des chambres de la biopile une première série de réactions chimiques faisant intervenir des enzymes ou des microorganismes et entraînant une diminution du pH de la solution dans la chambre ou une seconde série de réactions chimiques faisant intervenir des enzymes ou des microorganismes et entraînant une augmentation du pH de la solution dans la chambre. La biopile comprend, en outre, un dispositif qui, tout en assurant un pont salin entre l'anode et la cathode de la biopile empêche ou réduit le transfert d'ions $H^+$ ou $OH^-$ entre l'anode et la cathode pour maintenir une différence de pH entre l'anode et la cathode.

Toute réaction aboutissant à la formation d'ions $H^+$, et donc à une diminution du pH, peut convenir pour la première série de réactions. C'est en particulier le cas de l'oxydation du D-glucose, ou stéréoisomère D du glucose, par l'enzyme glucose oxydase (GOD), qui aboutit à la formation d'acide gluconique (susceptible de libérer un ion $H^+$) et d'eau oxygénée. L'eau oxygénée, qui peut être toxique, pourra si nécessaire être dégradée par l'enzyme catalase ce qui permettra de régénérer du dioxygène, protégeant ainsi l'organisme des effets potentiellement toxiques de l'eau oxygénée. Les réactions mises en oeuvre sont les suivantes :

$$\begin{aligned} &\text{D-glucose} + O_2 \xrightarrow{\text{glucose oxydase}} \text{D-acide gluconique} + H_2O_2 \\ &\text{D-acide gluconique} \longrightarrow \text{D-gluconate} + H^+ \\ &H_2O_2 \xrightarrow{\text{catalase}} \frac{1}{2}O_2 + H_2O \end{aligned} \qquad (11)$$

La première série de réactions peut correspondre à l'oxydation du L-glucose, ou stéréoisomère L du glucose, par l'enzyme L-fucose déshydrogénase. Les réactions mises en oeuvre sont les suivantes :

$$\begin{aligned} &\text{L-glucose} + \text{NADP} \xrightarrow{\text{L-fucose deshydrogénase}} \text{L} - \text{glucono} - 1{,}5 - \text{lactone} + \text{NADPH} \\ &\text{L} - \text{glucono} - 1{,}5 - \text{lactone} + H_2O \longrightarrow \text{L-acide gluconique} + H^+ \end{aligned} \qquad (12)$$

où le composé NADP correspond au Nicotinamide Adénine Dinucléotide Phosphate et où le composé NADPH correspond au même composé une fois réduit.

La seconde série de réactions mises en oeuvre par la présente invention pour rendre basique une solution peut correspondre à la dégradation de l'urée par l'enzyme uréase qui aboutit à la formation d'ions ammonium $NH_4^+$ et d'ions hydroxyle $OH^-$. Les réactions mises en oeuvre sont les suivantes :

$$\begin{aligned} &NH_2 - CO - NH_2 + H_2O \xrightarrow{\text{uréase}} CO_2 + 2NH_3 \\ &2NH_3 + H_2O \longrightarrow 2NH_4^+ + 2OH^- \end{aligned} \qquad (13)$$

Les réactions (11) et (13) présentent l'avantage de pouvoir être directement mises en oeuvre avec une solution biologique qui contient naturellement du D-glucose, qui est le glucose participant à la glycémie, et de l'urée. Les réactions (12) peuvent facilement être mises en oeuvre avec une solution biologique qui contient naturellement le composé NADP. Il suffit alors d'ajouter du L-glucose à la solution biologique.

La figure 1 représente, de façon schématique, un exemple de réalisation d'une biopile 10 selon l'invention. La biopile 10 comprend une enceinte 12, dans laquelle sont délimitées deux chambres 14A, 14B séparées par une membrane 16 dont le rôle sera décrit plus en détail par la suite. Dans le présent exemple de réalisation, on considère que,

au moins pendant une phase de fonctionnement de la biopile 10, l'énergie électrique fournie par la biopile 10 provient d'une réaction de réduction se produisant dans la chambre 14A et d'une réaction d'oxydation se produisant dans la chambre 14B de sorte que la chambre 14A est appelée chambre cathodique et la chambre 14B est appelée chambre anodique. Les chambres anodique et cathodique 14A, 14B de la biopile sont au moins en partie symétriques l'une de l'autre et les mêmes références sont utilisées pour désigner des éléments identiques des chambres avec le suffixe A pour un élément de la chambre cathodique 14A et avec le suffixe B pour un élément de la chambre anodique 14B.

Chaque chambre 14A, 14B comprend une électrode 18A, 18B constituée d'un matériau bon conducteur électronique, par exemple un métal, un alliage métallique, du carbone, un polymère conducteur, un matériau semiconducteur ou un mélange de ces matériaux. Chaque électrode 18A, 18B est plongée dans une première solution 19A, 19B dont le volume est délimité par une membrane semi-perméable 20A, 20B. La membrane 20A, 20B est plongée dans une seconde solution 21A, 21B dont le volume est délimité par la membrane 20A, 20B et par une membrane semi-perméable 22A, 22B. La membrane 22A, 22B est plongée dans une solution 23A, 23B dont le volume est délimité par la membrane 22A, 22B, l'enceinte 12 et la membrane 16. Les électrodes 18A, 18B sont connectées à une charge 24.

Le couple redox $Ox_1/Red_1$ est dissous dans la solution 19A et le couple $Ox_2/Red_2$ est dissous dans la solution 19B. Dans le présent exemple de réalisation, les couples redox $Ox_1/Red_1$ et $Ox_2/Red_2$ sont identiques. Il s'agit, par exemple du couple redox dont le réducteur $Red_1$ est l'hydroquinone, ou benzène-1,4-diol, ayant la formule brute $C_6H_4(OH)_2$ et dont l'oxydant $Ox_1$ correspond à la forme oxydée de l'hydroquinone. Plus précisément, l'oxydant $Ox_1$ a la formule brute $C_6H_4O_2$ et correspond au cyclohexa-2,5-diène-1,4-dione, également appelé 1,4-cyclohexadiènedione, 1,4-benzoquinone, p-benzoquinone ou parabenzoquinone. Dans la suite de la description, on utilisera le terme benzoquinone pour désigner le cyclohexa-2,5-diène-1,4-dione.

Au niveau de la chambre cathodique 14A, la demi-réaction électronique de réduction de la benzoquinone en hydroquinone, favorisée dans la solution 19A, est la suivante :

$$\mathbf{C_6H_4O_2 + 2H^+ + 2e^- \rightarrow C_6H_4(OH)_2} \qquad (14)$$

Dans la solution 21A, on privilégie les réactions (11) ou (12) décrites précédemment. A titre d'exemple, on dispose des enzymes GOD dans la solution 21A. Les membranes 20A et 22A sont choisies pour ne pas laisser passer les enzymes GOD. Pour limiter la diffusion du couple redox $Ox_1/Red_1$, la membrane 20A peut être choisie pour ne pas laisser passer la benzoquinone ou l'hydroquinone. Par ailleurs, la membrane 22A est choisie pour laisser passer le glucose et le gluconate.

Les membranes 20A, 22A peuvent être des membranes de dialyse. Le seuil de coupure de la membrane 20A peut alors être d'environ 100 Daltons et le seuil de coupure de la membrane 22A peut être de l'ordre de 4000 à 60000 Daltons. La membrane 20A ou la membrane 22A peut correspondre à une membrane chargée.

Il peut être souhaitable de supprimer la membrane 20A en particulier lorsque le couple redox $Ox_1/Red_1$ n'a pas d'effet inhibiteur sur les enzymes GOD. Dans ce cas, il est avantageux d'utiliser un couple redox $Ox_1/Red_1$ correspondant à des molécules de poids moléculaire plus élevé que le couple benzoquinone/hydroquinone de façon que, lorsque la membrane 22A est une membrane de dialyse, le seuil de la membrane 22A soit suffisamment faible pour retenir le couple redox $Ox_1/Red_1$ et suffisamment élevé pour permettre le passage du glucose et du gluconate.

Au niveau de la chambre anodique 14B, la demi-réaction électronique d'oxydation de l'hydroquinone, favorisée dans la solution 19B, est la suivante :

$$\mathbf{C_6H_4(OH)_2 \rightarrow C_6H_4O_2 + 2H^+ + 2e^-} \qquad (15)$$

Dans la solution 21B, on privilégie les réactions (13). A titre d'exemple, on dispose des enzymes uréase dans la solution 21B. La benzoquinone et l'hydroquinone tendant à inhiber les enzymes uréase, la membrane 20B est choisie pour ne pas laisser passer les enzymes uréase, la benzoquinone et l'hydroquinone. Par ailleurs, la membrane 22B est choisie pour ne pas laisser passer les enzymes uréase et pour laisser passer l'urée, les ions ammonium $NH_4^+$ et les ions hydroxyle $OH^-$.

A titre d'exemple, les membranes 20B et 22B correspondent à des membranes de dialyse. Dans ce cas, le seuil de coupure de la membrane 20B peut être d'environ 100 Daltons et le seuil de coupure de la membrane 22B peut être de l'ordre de 4000 à 60000 Daltons. La membrane 20B ou la membrane 22B peut correspondre à une membrane chargée.

Les membranes 16, 20A, 22A, 20B, 22B sont perméables au solvant qui constitue les solutions 19A, 19B, 21A, 21B, 23A, 23B. La membrane 16 est adaptée à assurer l'équilibre ionique entre les chambres 14A et 14B. Il s'agit, par exemple, d'une membrane constituée de gel ou d'hydrogel organique ou inorganique, d'une membrane lipidique associée à une protéine transmembranaire, d'un polymère conducteur ionique, etc... A titre d'exemple, la membrane 16 correspond à une membrane gel du type Agar-Agar ou Agarose chargée en chlorure de potassium (KCl). Une telle membrane 16 empêche ou au moins réduit fortement le passage des ions $H^+$ de la chambre cathodique 14A vers la chambre anodique

14B et des ions hydroxyle OH- de la chambre anodique 14B vers la chambre cathodique 14A. Une telle membrane 16 est chargée en ions $K^+$ et $Cl^-$ de façon à permettre la libération d'ions $K^+$ dans la chambre anodique 14B et d'ions Cl- dans la chambre cathodique 14A pour assurer l'équilibre ionique global des solutions. La membrane 16 assure le maintien de la différence de pH entre les chambres 14A et 14B en limitant le transfert des ions $H^+$ et $OH^-$ d'une chambre 14A, 14B à l'autre.

Des moyens, non représentés, permettent d'assurer l'alimentation de la solution 23A en glucose et de la solution 23B en urée. Pour ce faire, l'enceinte 12 peut être plongée dans une solution contenant du glucose et de l'urée, par exemple une solution biologique. On peut alors prévoir une ou plusieurs vannes au niveau de l'enceinte 12 permettant, lorsqu'elles sont ouvertes, de faire communiquer les solutions 23A, 23B avec l'extérieur. A titre d'exemple, l'enceinte 12 peut être constituée en totalité d'une membrane semi-perméable dont le seuil de coupure est suffisamment élevé pour laisser passer le glucose et l'urée.

De façon générale, la forme des électrodes 18A, 18B est adaptée à assurer un échange électronique le plus efficace possible avec les couples redox $Ox_1/Red_1$ et $Ox_2/Red_2$. A titre d'exemple, les électrodes 18A, 18B peuvent avoir la forme de grille.

Le fonctionnement de la biopile 10 est le suivant. Initialement, les solutions 19A et 19B peuvent comprendre des concentrations identiques de benzoquinone et d'hydroquinone, par exemple sous la forme de complexes benzoquinone/hydroquinone. Initialement, les pH des solutions 19A, 19B sont sensiblement identiques, par exemple de l'ordre de 7. Les potentiels redox du couple benzoquinone/hydroquinone dans la chambre cathodique 14A et dans la chambre anodique 14B sont donc initialement sensiblement égaux. Du glucose est introduit dans la solution 23A et de l'urée est introduite dans la solution 23B. La réaction de dégradation du glucose dans la solution 21A conduit à une diminution du pH dans la solution 21A, puis dans la solution 19A entourée par la solution 21A. La diminution du pH dans la solution 19A se traduit par une augmentation du potentiel redox du couple benzoquinone/hydroquinone dans la chambre cathodique 14A. Parallèlement, la réaction de dégradation de l'urée dans la solution 21B conduit à une augmentation du pH dans la solution 21B, puis dans la solution 19B entourée par la solution 21B. L'augmentation du pH dans la solution 19B se traduit par une diminution du potentiel redox du couple benzoquinone/hydroquinone dans la chambre cathodique 14B. On obtient une différence de potentiels entre les électrodes 18B et 18A donnée par la relation (9). La demi-réaction électronique (14) se produit donc dans la chambre cathodique 14A et la demi-réaction électronique (15) se produit dans la chambre anodique 14B.

La Demanderesse a réalisé une biopile 10 permettant d'obtenir une puissance de 10,2 $\mu$W, avec une puissance surfacique de 2,4 $\mu W/cm^2$ pour une différence de potentiels $\Delta E$ de 0,30 V.

Selon une variante, on peut prévoir une membrane supplémentaire entourant la membrane 20A et correspondant à une membrane chargée réalisée à partir du matériau connu sous l'appellation Nafion. Une telle membrane permet de ne pas laisser passer les anions, par exemple les anions bicarbonate $HCO_3^-$, alors qu'elle laisse passer les cations et le glucose. Ceci permet d'éviter une variation du pH dans la solution 19A en raison d'anions présents dans la solution d'apport du glucose, par exemple une solution biologique. On peut prévoir une membrane supplémentaire entourant la membrane 20B et correspondant à une membrane chargée ne laissant pas passer les cations et laissant passer les anions. Ceci permet d'éviter une variation du pH dans la solution 19B en raison de cations présents dans la solution d'apport d'urée, par exemple une solution biologique.

Des couples redox autres que le couple benzoquinone/ hydroquinone pourraient être utilisés. Par exemple, on peut utiliser un couple redox dont l'oxydant est une quinone et dont le réducteur est une forme réduite de ladite quinone. En outre, dans l'exemple de réalisation décrit précédemment, le même couple redox est utilisé dans la chambre anodique et dans la chambre cathodique. Toutefois, un premier couple redox peut être utilisé dans la chambre anodique et un second couple redox, différent du premier couple, peut être utilisé dans la chambre cathodique. Dans ce cas, initialement lorsque les pH des chambres 14A, 14B sont identiques, les potentiels redox des couples dans les chambres 14A et 14B peuvent être différents selon l'équation (9). La différence de pH due à l'action des enzymes dans les chambres 14A, 14B peut alors être utilisée pour accroître davantage la différence de potentiels entre les chambres 14A et 14B.

Dans l'exemple de réalisation décrit précédemment, on a fait varier le pH à la fois dans la chambre cathodique 14A et dans la chambre anodique 14B. Toutefois, indépendamment du fait que le même couple redox ou des couples redox différents sont utilisés dans les chambres 14A et 14B, une variation du pH dans une seule des chambres 14A, 14B peut être suffisant pour obtenir une différence convenable entre le potentiel redox du couple redox présent dans la chambre cathodique 14A et le potentiel redox du couple redox présent dans la chambre anodique 14B. A titre d'exemple, par rapport à l'exemple de réalisation décrit précédemment, seules des enzymes glucose oxydase GOD peuvent être disposées dans la solution 21A, les enzymes uréase n'étant pas présentes et la membrane 22B pouvant être supprimée. La solution 19B peut avoir un pH sensiblement neutre ou légèrement basique s'il s'agit d'une solution biologique. En effet, la diminution de pH dans la solution 19A due à l'oxydation du glucose par l'enzyme GOD entraîne une augmentation du potentiel redox du couple redox benzoquinone/hydroquinone dans la solution 19A par rapport au potentiel redox du couple redox benzoquinone/hydroquinone dans la solution 19B, ce qui permet l'établissement de la demi-réaction (14) dans la chambre cathodique 14A et de la demi-réaction (15) dans la chambre anodique 14B. Selon un autre exemple,

seules les enzymes uréase peuvent être disposées dans la solution 21B, les enzymes GOD n'étant pas présentes et la membrane 21A étant supprimée. En effet, l'augmentation de pH dans la solution 19B due à la dégradation de l'urée par l'enzyme uréase entraîne une diminution du potentiel redox du couple redox benzoquinone/hydroquinone dans la solution 19B par rapport au potentiel redox du couple redox benzoquinone/hydroquinone dans la solution 19A, ce qui permet l'établissement de la demi-réaction (14) dans la chambre cathodique 14A et de la demi-réaction (15) dans la chambre anodique 14B.

Lors du fonctionnement décrit précédemment de la biopile 10, on produit de l'hydroquinone en consommant de la benzoquinone dans la chambre cathodique 14A et on produit de la benzoquinone en consommant de l'hydroquinone dans la chambre anodique 14B. Les réactions (14) et (15) vont donc s'interrompre lorsque la concentration de benzoquinone sera trop faible dans la chambre cathodique 14A et que la concentration en hydroquinone sera trop faible dans la chambre anodique 14B. Plusieurs possibilités peuvent être prévues pour éviter l'arrêt du fonctionnement de la pile 10.

Selon un exemple de réalisation de biopile permettant le renouvellement des espèces chimiques dans les chambres 14A, 14B, la biopile comprend des moyens de vidange et d'apport de benzoquinone dans la chambre cathodique 14A et d'hydroquinone dans la chambre anodique 14B de sorte que la réaction (14) se poursuive dans la chambre cathodique 14A et que la réaction (15) se poursuive dans la chambre anodique 14B.

Selon un autre exemple de réalisation de biopile permettant le renouvellement des espèces chimiques dans les chambres 14A, 14B, les couples redox présents dans les chambres 14A et 14B sont choisis de façon à être réversibles, ce qui est le cas du couple benzoquinone/hydroquinone. L'ensemble formé par la membrane 20A, la solution 19A et l'électrode 18A peut être retiré de la solution 21A et disposé dans la solution 21B. En outre, l'ensemble formé par la membrane 20B, la solution 19B et l'électrode 18B peut être retiré de la solution 21B et disposé dans la solution 21A. L'échange est réalisé dès que les réactions (14) et (15) tendent à s'arrêter. Une fois l'échange réalisé et lorsque les pH se sont stabilisés, les réactions (14) et (15) peuvent se poursuivre puisque l'hydroquinone a été renouvelée dans la chambre anodique 14B et que la benzoquinone a été renouvelée dans la chambre cathodique 14A.

Selon un autre exemple de réalisation de biopile permettant le renouvellement des espèces chimiques dans les chambres 14A, 14B, les couples redox présents dans les chambres 14A et 14B sont choisis de façon à être réversibles. Lorsque les réactions (14) et (15) tendent à s'arrêter, les électrodes 18A, 18B sont connectées à une source d'énergie suffisante de façon à forcer, dans les chambres 14A, 14B, les demi-réactions inverses des demi-réactions (14) et (15), c'est-à-dire, de façon à favoriser dans la chambre anodique 14B, la réduction de la quinone en hydroquinone, et de façon à favoriser, dans la chambre cathodique 14A, l'oxydation d'hydroquinone en benzoquinone.

La figure 2 représente un autre exemple de réalisation de biopile 30 permettant le renouvellement des espèces chimiques dans les chambres 14A, 14B lorsque les couples redox présents dans les chambres 14A et 14B sont des couples réversibles. La biopile 30 comprend une enceinte secondaire 32A qui communique avec la solution 19A par une ouverture 33A. Une vanne 34A, lorsqu'elle est ouverte, met en communication le contenu de l'enceinte secondaire 32A avec la solution 19A. Une membrane semi-perméable 35A sépare le contenu de l'enceinte secondaire 32A de la solution 19A. L'enceinte secondaire 32A comprend une ou plusieurs enzymes adaptées à produire de la benzoquinone à partir de l'hydroquinone. La membrane 35A est choisie pour ne pas laisser passer les enzymes contenues dans l'enceinte 32A et pour laisser passer la benzoquinone et l'hydroquinone.

A titre d'exemple, l'enzyme présente dans l'enceinte secondaire 32A est une tyrosinase du type polyphénol oxydase qui favorise la réaction suivante :

$$C_6H_4(OH)_2 + \frac{1}{2}O_2 \xrightarrow{\text{tyrosinase}} C_6H_4O_2 + H_2O \qquad (16)$$

Selon un autre exemple, l'enzyme est une peroxydase qui favorise, en présence d'eau oxygénée, la réaction suivante :

$$C_6H_4(OH)_2 + H_2O_2 \xrightarrow{\text{peroxydase}} C_6H_4O_2 + 2H_2O \qquad (17)$$

Le fonctionnement de la biopile 30 est le suivant. En fonctionnement normal, la vanne 34A est fermée et le fonctionnement de la biopile 30 est identique à ce qui a été décrit précédemment en relation avec la biopile 10. Lorsque la concentration de benzoquinone dans la chambre cathodique 14A doit être augmentée, la vanne 34A est ouverte. L'hydroquinone pénètre alors dans l'enceinte secondaire 32A dans laquelle elle est transformée en benzoquinone sous l'action des enzymes présentes dans l'enceinte 32A. Lorsque la concentration de benzoquinone est suffisante, la vanne 34A est fermée.

Le renouvellement de l'hydroquinone dans la chambre anodique 14B peut être réalisé par ajout d'hydroquinone

dans la solution 19B.

La figure 3 représente un autre exemple de réalisation de biopile 36 permettant le renouvellement des espèces chimiques dans les chambres 14A, 14B lorsque les couples redox présents dans les chambres 14A et 14B sont des couples réversibles. La biopile 36 comprend l'ensemble des éléments de la biopile 30 et comprend, en outre, au niveau de la chambre anodique 14B, une enceinte secondaire 32B analogue à l'enceinte secondaire 32A.

L'enceinte secondaire 32B comprend une ou plusieurs enzymes adaptées à produire de l'hydroquinone à partir de la benzoquinone. La membrane 35B est choisie pour ne pas laisser passer les enzymes contenues dans l'enceinte 32B et pour laisser passer la benzoquinone et l'hydroquinone.

A titre d'exemple, l'enzyme présente dans l'enceinte secondaire 32B est une diaphorase qui favorise la réaction suivante :

$$C_6H_4O_2 + 2NADPH \xrightarrow{\text{diaphorase}} C_6H_4(OH)_2 + 2NADP \qquad (18)$$

La biopile 36 comprend alors des moyens d'apport du composé NADPH dans l'enceinte secondaire 32B. Il peut être avantageux de prévoir un apport du composé NADPH dans l'enceinte secondaire 32B plutôt qu'un apport d'hydroquinone dans la solution 19B dans la mesure où ceci permet de maintenir les concentrations de benzoquinone et d'hydroquinone dans des plages limitées.

Selon un autre exemple, l'enzyme présente dans l'enceinte secondaire 32B est une para-benzoquinone réductase qui favorise une réaction identique à la réaction (18).

Selon un autre exemple, l'enzyme présente dans l'enceinte secondaire 32B est une L-malate déshydrogénase qui favorise la réaction suivante :

$$C_6H_4O_2 + (S) - \text{malate} \xrightarrow{\text{L-malate déshydrogénase}} C_6H_4(OH)_2 + \text{oxaloacétate} \qquad (19)$$

Le fonctionnement de la biopile 36 va maintenant être décrit. En fonctionnement normal, les vannes 34A et 34B sont fermées et le fonctionnement de la biopile 36 est identique à ce qui a été décrit précédemment en relation avec la biopile 10. Lorsque la concentration de benzoquinone dans la chambre cathodique 14A doit être augmentée et que la concentration en hydroquinone dans la chambre anodique 14B doit être augmentée, les vannes 34A et 34B sont ouvertes. L'hydroquinone pénètre alors dans l'enceinte secondaire 32A dans laquelle elle est transformée en benzoquinone sous l'action des enzymes présentes dans l'enceinte 32A et la benzoquinone pénètre alors dans l'enceinte secondaire 32B dans laquelle elle est transformée en hydroquinone sous l'action des enzymes présentes dans l'enceinte 32B. Lorsque les concentrations en benzoquinone et hydroquinone sont suffisantes, les vannes 34A et 34B sont fermées.

Selon une variante de la biopile 36, seule l'enceinte secondaire 32B peut être présente. Le renouvellement de la benzoquinone au niveau de la chambre cathodique 14A peut alors être réalisé par apport de benzoquinone dans la solution 19A.

La figure 4 représente un autre exemple de réalisation de biopile 37 permettant le renouvellement des espèces chimiques dans les chambres 14A, 14B lorsque les couples redox présents dans les chambres 14A et 14B sont des couples réversibles. La biopile 37 comprend l'ensemble des éléments de la biopile 10 et comprend, en outre, une conduite 38 étanche qui débouche à une extrémité dans la solution 19A et qui débouche à l'extrémité opposée dans la solution 19B. Une vanne 39 est prévue dans la conduite 38. Les moyens de commande de la vanne 39 ne sont pas représentés.

Le fonctionnement de la biopile 37 va maintenant être décrit. En fonctionnement normal, la vanne 39 est fermée et le fonctionnement de la biopile 37 est identique à ce qui a été décrit précédemment en relation avec la biopile 10. Lorsque la concentration de benzoquinone dans la chambre cathodique 14A doit être augmentée et que la concentration en hydroquinone dans la chambre anodique 14B doit être augmentée, la vanne 39 est ouverte. De l'hydroquinone se propage alors depuis la solution 19A jusqu'à la solution 19B et de la benzoquinone se propage depuis la solution 19B jusqu'à la solution 19A. Lorsque les concentrations d'hydroquinone et de benzoquinone sont sensiblement égales dans chaque solution 19A et 19B, la vanne 39 est fermée.

La figure 5 représente un autre exemple de réalisation de biopile 40 permettant le renouvellement des espèces chimiques dans les chambres 14A et 14B lorsque les couples redox présents dans les chambres 14A et 14B sont des couples réversibles. La biopile 40 reprend les mêmes éléments que la biopile 10 représentée en figure 1 à l'exception des membranes 22A et 22B. En outre, la biopile 40 comprend quatre dispositifs de variation de pH 42C, 42D, 42E et 42F. Dans la suite de la description, on ajoute les suffixes "C", "D", "E" et "F" pour désigner des éléments associés respectivement aux dispositifs de variation de pH 42C, 42D, 42E et 42F. Seul le dispositif de variation de pH 42C va

être décrit. Le dispositif 42C comprend une enceinte 44C étanche et une vanne 46C qui, lorsqu'elle est ouverte, met en communication le contenu de l'enceinte 44C avec le milieu extérieur. Le dispositif 42C comprend une vanne 48C qui, lorsqu'elle est ouverte, met en communication le contenu de l'enceinte 44C avec la solution 23A. Le dispositif 42C comprend une membrane 50C disposée entre la vanne 46C et le contenu de l'enceinte 44C et une membrane 52C disposée entre la vanne 48C et le contenu de l'enceinte 44C. Les dispositifs de variation de pH 42D, 42E et 42F ont des structures similaires à celle du dispositif de variation de pH 42C, la vanne 48E du dispositif 42E débouchant au niveau de la chambre 14A et les vannes 48D et 48F des dispositifs 42D et 42F débouchant au niveau de la chambre 14B.

Les dispositifs 42C et 42D sont du type permettant la diminution du pH de la solution qu'ils contiennent. A titre d'exemple, les dispositifs 42C et 42F permettent une acidification de la solution contenue dans l'enceinte 44C, 44F associée selon les réactions (11) décrites précédemment. Les dispositifs 42E et 42F sont du type permettant l'augmentation du pH de la solution qu'ils contiennent. A titre d'exemple, les dispositifs 42E, 42F permettent une alcalinisation de la solution contenue dans l'enceinte 44E, 44F associée selon les réactions (13) décrites précédemment.

Un exemple de fonctionnement de la pile 40 est le suivant. Parallèlement au cycle d'ouvertures des vannes 48C à 48F qui va maintenant être décrit, les vannes 46C à 46F des dispositifs 42C à 42F sont commandées pour alimenter les enceintes 44C à 44F en glucose et/ou en urée de façon que les enceintes 44C à 44F contiennent des solutions ayant le pH désiré. Initialement, les solutions 19A et 19B ont le même pH. Pendant une première phase de fonctionnement, la vanne 48C est ouverte, la vanne 48D est fermée, la vanne 48E est fermée et la vanne 48F est ouverte. Des ions $H^+$ sont alors libérés dans la chambre 14A par le dispositif 42C entraînant une diminution du pH de la solution 19A et des ions $OH^-$ sont libérés par le dispositif 42F entraînant une augmentation du pH de la solution 19B. La diminution de pH de la solution 19A se traduit par une augmentation du potentiel redox du couple redox présent dans la chambre 14A et l'augmentation de pH de la solution 19B se traduit par une diminution du potentiel redox du couple redox présent dans la chambre 14B. La réaction de réduction (14) décrite précédemment se produit dans la chambre 14A et la réaction d'oxydation (15) décrite précédemment se produit dans la chambre 14B. On observe donc un transfert d'électrons de l'électrode 18B, qui joue le rôle d'électrode anodique, vers l'électrode 18A, qui joue le rôle d'électrode cathodique, à travers la charge 24.

Pendant une seconde phase de fonctionnement, la vanne 48C est fermée, la vanne 48D est ouverte, la vanne 48E est ouverte et la vanne 48F est fermée. Des ions $H^+$ sont alors libérés par le dispositif 42D entraînant une diminution du pH de la solution 19B. Simultanément, des ions $OH^-$ sont libérés par le dispositif 42E entraînant une augmentation du pH de la solution 19A. La diminution de pH de la solution 19B se traduit par une augmentation du potentiel redox du couple redox présent dans la chambre 14B et l'augmentation de pH de la solution 19A se traduit par une diminution du potentiel redox du couple redox présent dans la chambre 14A. La réaction de réduction (14) décrite précédemment se produit dans la chambre 14B et la réaction d'oxydation (15) décrite précédemment se produit dans la chambre 14A. On observe donc un transfert d'électrons de l'électrode 18A, qui joue le rôle d'électrode anodique, vers l'électrode 18B, qui joue le rôle d'électrode cathodique, à travers la charge 24. Les pôles de la biopile 40 sont donc inversés dans la seconde phase par rapport à la première phase. Les première et seconde phases peuvent être alternées de façon cyclique.

La figure 6 représente un autre exemple de réalisation de biopile 60 permettant le renouvellement des espèces chimiques dans les chambres 14A et 14B lorsque les couples redox présents dans les chambres 14A et 14B sont des couples réversibles. La biopile 60 peut avoir la même disposition des membranes 20A, 20B, 22A, 22B que la biopile 10. Des enzymes favorisant des réactions entraînant une diminution de pH, par exemple les réactions (11) ou (12) décrites précédemment, sont contenues dans des réservoirs 62C disposés dans la solution 21A et dans des réservoirs 62D disposés dans la solution 21B. Des enzymes favorisant des réactions entraînant une augmentation de pH, par exemple la réaction (13) décrite précédemment, sont contenues dans des réservoirs 62E disposés dans la solution 21A et dans des réservoirs 62F disposés dans la solution 21B.

Chaque réservoir 62C à 62F peut passer d'une première configuration, dite "fermée", dans laquelle le réservoir est sensiblement étanche, c'est-à-dire que le contenu du réservoir 62C à 62F ne communique pas ou très peu avec la solution 21A, 21B, à une seconde configuration, dite "ouverte", dans laquelle le contenu du réservoir communique avec la solution 21A, 21B. L'ouverture et la fermeture des réservoirs 62C à 62F peuvent être commandées électriquement. A titre d'exemple, chaque réservoir 62C à 62F comprend deux bornes de commande 64C à 64F et 66C à 66F et peut changer de configuration en fonction de la tension appliquée entre les bornes de commande 64C à 64F et 66C à 66F associées. Les réservoirs 62C à 62F sont montés en parallèle entre deux pistes 68C à 68F et 70C à 70F. Une tension $V_C$ à $V_F$ est appliquée entre les pistes 68C à 68F et 70C à 70F pour commander l'ouverture ou la fermeture des réservoirs 62C à 62F associés.

La figure 7 représente de façon schématique un exemple de réalisation de l'un des réservoirs 62C. Les réservoirs 62D à 62F peuvent avoir une structure analogue au réservoir 62C. Le réservoir 62C a la forme d'une boîte 72 fermée par un couvercle 74 relié au reste de la boîte 72 par une charnière 76. La charnière 76 est constituée d'un matériau électroactif, par exemple d'un polymère électroactif. Il s'agit par exemple de polymères électroactifs commercialisés par la société Micromuscle. Il existe plusieurs types de polymères électroactifs. Le polymère électroactif peut être du type IPMC (Ionic Polymer Métal Composite) et correspondre à une membrane de polymères polyélectrolytes réticulés remplis

d'eau sur deux faces de laquelle sont formées des électrodes. Pour un IPMC, l'application d'un champ électrique entre les deux électrodes entraîne un déplacement d'ions à l'intérieur de la membrane, ce qui change la répartition du solvant à proximité de chaque électrode d'où l'obtention d'une déformation de la membrane. Il peut s'agir également d'un polymère conducteur (CP) qui est un matériau ayant la propriété de perdre et de gagner facilement des électrons, par réactions d'oxydoréduction, quand il est soumis à une tension. Plongés dans une solution contenant des ions, un polymère conducteur va attirer/repousser certains ions pour lesquels il est perméable, entraînant une déformation du polymère. Il peut s'agir également d'un polymère diélectrique comprenant un film d'élastomère disposé entre deux électrodes compliantes qui, lorsqu'elles sont soumises à un champ électrique, vont s'attirer et comprimer l'élastomère. La borne 64C est reliée à une face de la charnière 76 et la borne 66C est reliée à la face opposée. A titre d'exemple, lorsqu'aucune tension n'est appliquée entre les bornes 64C, 66C, la charnière 76 est dans une configuration dans laquelle le couvercle 74 est ouvert. Lorsqu'une tension suffisante est appliquée entre les bornes 64C, 66C, la charnière 76 est dans une configuration dans laquelle le couvercle 74 est rabattu contre la boîte 72. D'autres formes de réservoirs pourraient être prévues, la forme du réservoir devant être adaptée pour obtenir une étanchéité acceptable lorsque le réservoir est fermé.

Le fonctionnement de la biopile 60 est identique à ce qui a été décrit précédemment en relation avec la biopile 40, les réservoirs 62C, 62D, 62E et 62F jouant respectivement le rôle du dispositif 42C, 42D, 42E et 42F. Une ouverture (inversement une fermeture) de la vanne 48C à 48F d'un dispositif 42C à 42F pour la biopile 40 correspond à une ouverture (inversement une fermeture) des réservoirs 62C à 62F pour la biopile 60.

La figure 8 représente un autre exemple de réalisation de biopile 70. Par rapport à la biopile 10 représentée en figure 1, le couple redox $Ox_1/Red_1$ est disposé au niveau d'une phase poreuse, solide ou gélifiée 72A recouvrant l'électrode 18A et plongée dans la solution 21A. De même, le couple redox $Ox_2/Ped_2$ est disposé au niveau d'une phase poreuse, solide ou gélifiée 72B recouvrant l'électrode 18B et plongée dans la solution 21B. Les membranes 20A et 20B ne sont alors plus présentes. Le fait d'immobiliser les couples redox au niveau d'une phase poreuse, solide ou gélifiée, permet de réduire l'encombrement global de la biopile 70.

La figure 9 représente un autre exemple de réalisation de biopile 80. Par rapport à la biopile 70 représentée en figure 8, les enzymes participant à la diminution du pH à la cathode sont disposées au niveau d'une phase poreuse, solide ou gélifiée 82A recouvrant la phase 72A et plongée dans la solution 23A. De même, les enzymes participant à l'augmentation du pH sont disposées au niveau d'une phase poreuse, solide ou gélifiée 82B recouvrant la phase 72B et plongée dans la solution 23B. Les membranes 22A et 22B ne sont alors plus présentes. Le fait d'immobiliser les enzymes participant à la variation de pH au niveau de phases poreuses, solides ou gélifiées, permet de réduire l'encombrement global de la biopile 80. Ceci permet, en outre, de rapprocher le plus possible le volume dans lequel la variation de pH est initiée du volume où se trouvent les couples redox dont le potentiel redox varie en fonction du pH. Ceci permet d'améliorer l'efficacité de la pile.

Des exemples d'applications vont maintenant être décrits pour lesquels l'utilisation de la biopile selon la présente invention est particulièrement avantageuse.

La biopile est particulière adaptée à une implantation dans le corps humain. Dans ce cas, l'enceinte 12 peut correspondre à une membrane souple, par exemple du type utilisé pour les opérations de dialyse.

La biopile peut correspondre à une source d'alimentation pour un système électronique portable, tel qu'un téléphone portable, un baladeur, un appareil photo ou un caméscope. Le système électronique peut comprendre une source d'alimentation principale classique adaptée à fournir une puissance importante, et une biopile, utilisée comme source d'alimentation secondaire. La biopile peut alors être utilisée pour assurer l'alimentation du système électronique dans un mode de fonctionnement dans lequel le système électronique nécessite seulement une consommation réduite. Ceci correspond, par exemple, au mode de veille d'un téléphone portable pour lequel l'écran du téléphone est généralement éteint.

La biopile peut être intégrée à un support quelconque, le fonctionnement de la biopile étant initié lorsque le support est au contact d'un solvant contenant les éléments nécessaires pour que s'effectuent les réactions entraînant une variation de pH. A titre d'exemple, la biopile selon l'invention peut être intégrée à un papier ou à un tissu. Le fonctionnement de la biopile peut alors être initié au contact de la sueur d'un individu.

Des modes de réalisation particuliers de la présente invention ont été décrits. Diverses variantes et modifications apparaîtront à l'homme de l'art. En particulier, une biopile selon l'invention pourrait comprendre certains éléments de l'un des exemples de réalisation décrits précédemment et d'autres éléments d'un autre exemple parmi les exemples de réalisation décrits précédemment. A titre d'exemple, un exemple de réalisation de biopile selon l'invention pourrait comprendre une cathode ayant la même structure que la cathode de la biopile représentée en figure 9 et une anode ayant la même structure que l'anode représentée en figure 1. déroulement de la réaction (17) provient de la réaction (21) qui se produit dans le contenu 94. Dans le présent exemple de réalisation, il est nécessaire de prévoir du dioxygène dans le contenu 94 pour que la réaction (21) se produise. Par rapport à une biopile classique, la présence de dioxygène ne perturbe donc pas le fonctionnement de la biopile 90.

Selon une variante de réalisation, on prévoit en outre dans la solution 100 des enzymes polyphénol oxydase

qui favorisent la production de benzoquinone dans la solution 100 à partir d'hydroquinone et d'oxygène. Cette réaction peut se produire parallèlement à la réaction (17).

Le fonctionnement de la biopile 90 est le suivant. Initialement, la solution 100 peut comprendre des concentrations identiques de benzoquinone et d'hydroquinone, par exemple sous la forme de complexes benzoquinone/hydroquinone et le contenu 94 peut comprendre des concentrations identiques d'ubiquinone et de la forme réduite de l'ubiquinone. Le potentiel redox standard du couple redox benzoquinone/hydroquinone est alors sensiblement de l'ordre de 0,7 V à 25°C et le potentiel redox standard du couple $U/UH_2$ est sensiblement de l'ordre de 0,5 V à 25°C.

Avant que les électrodes 96, 102 ne soient reliées à la charge 104, les réactions de régénération (22) et (17) se produisent. De ce fait, la présence de l'enzyme GOD, du D-Glucose et de l'ubiquinone dans le contenu 94 conduit à la formation d'ubiquinol $UH_2$ selon la réaction (22). Il en résulte une augmentation de la concentration d'ubiquinol $UH_2$ au cours du temps. Le rapport entre la concentration d'ubiquinone U et d'ubiquinol $UH_2$ tend alors à diminuer, ce qui fait diminuer le potentiel redox du couple $U/UH_2$ (cf. équation (8)). En outre, dans la solution 100, l'enzyme peroxydase consomme de l'eau oxygénée et de l'hydroquinone selon la réaction (17). Par conséquent, la concentration d'hydroquinone $QH_2$ diminue au cours du temps. Le rapport entre la concentration de benzoquinone Q et l'hydroquinone $QH_2$ tend alors à augmenter, ce qui fait augmenter le potentiel redox du couple $Q/QH_2$ (cf. équation (6)). On crée donc une différence de potentiels entre le couple $Q/QH_2$ et le couple $U/UH_2$ uniquement en jouant sur les concentrations des formes oxydées ou réduites des couples redox. Cette différence de potentiels créée en influant sur le rapport de concentrations s'ajoute à la différence de potentiels due à la différence des potentiels standards des couples redox $Q/QH_2$ et $U/UH_2$.

Lorsque les électrodes 96 et 102 sont reliées à la charge 104, la réaction (14) de réduction de la benzoquinone tend alors à se produire dans la solution 100 et la réaction (20) d'oxydation de $UH_2$ tend alors à se produire dans le contenu 94. Parallèlement, les réactions de régénération (22) et (17) se produisent.

La figure 11 représente, de façon schématique, un exemple de réalisation d'une biopile 110 selon l'invention. La biopile 110 comprend un sac 112, constitué d'une membrane semi-perméable et contenant une solution 114. Deux sacs 116, 118, constitués d'une membrane semi-perméable, sont placés dans la solution 114. Les sacs 116, 118 peuvent avoir une paroi commune. Le sac 116 contient une solution 120 et le sac 118 contient une solution 122. Une électrode 124 est plongée dans la solution 120 et une électrode 126 est plongée dans la solution 122. Les électrodes 124, 126 sont connectées à une charge 128. Le sac 112 est plongé dans une solution 130.

Un couple redox $Ox_1/Red_1$ est dissous dans la solution 120 et un couple $Ox_2/Red_2$ est dissous dans la solution 122. Dans le présent exemple de réalisation, les couples redox $Ox_1/Red_1$ et $Ox_2/Red_2$ sont différents. A titre d'exemple, le réducteur $Red_1$ est l'hydroquinone $QH_2$ et l'oxydant $Ox_1$ correspond à la benzoquinone Q. Dans la solution 120, on favorise la réduction de la benzoquinone en hydroquinone selon la réaction (14).

A titre d'exemple, le réducteur $Red_2$ est l'ascorbate, noté $AH_2$, de formule brute $C_6H_8O_6$ et l'oxydant $Ox_2$ est le déhydroascorbate, notée A. Dans la solution 122, on favorise la réaction d'oxydation de l'ascorbate $AH_2$ en déhydroascorbate A selon la réaction suivante :

$$\mathbf{AH_2 \rightarrow A + 2H^+ + 2e^-} \qquad (23)$$

Les membranes 116, 118 sont choisies pour ne pas laisser passer la benzoquinone, l'hydroquinone, l'ascorbate et le déhydroascorbate. La solution 130 contient du glucose. Il s'agit, par exemple, d'une solution biologique. On dispose, dans la solution 114, des enzymes GOD. La membrane 112 est choisie pour laisser passer le glucose et ne pas laisser passer les enzymes GOD.

Dans la solution 114, on favorise l'oxydation du glucose selon la réaction (21).

Dans la solution 120, on dispose des enzymes adaptées à favoriser la formation de benzoquinone à partir d'hydroquinone. Il s'agit, par exemple, d'enzymes peroxydase. La membrane 116 est choisie pour ne pas laisser passer les enzymes peroxydase mais pour laisser passe l'eau oxygénée ($H_2O_2$). Les enzymes peroxydase favorisent la réaction (17) décrite précédemment. L'eau oxygénée nécessaire au déroulement de la réaction (17) provient de la réaction (21) qui se produit dans la solution 114.

Dans la solution 122, on dispose des protéines adaptées à favoriser la formation d'ascorbate $AH_2$ à partir de déhydroascorbate A selon la réaction suivante :

$$A \xrightarrow{PDI} AH_2 \qquad (24)$$

Il s'agit, par exemple, de l'enzyme correspondant à la protéine disulfide isomérase ou PDI.

Le fonctionnement de la biopile 110 est le suivant. Initialement, la solution 120 peut comprendre des concentrations identiques de benzoquinone et d'hydroquinone, par exemple sous la forme de complexes benzoquinone/hydroquinone et la solution 122 peut comprendre des concentrations identiques d'ascorbate et de déhydroascorbate. Le potentiel redox du couple redox benzoquinone/hydroquinone est alors sensiblement de l'ordre de 0,7 V et le potentiel redox du couple $A/AH_2$ est sensiblement de l'ordre de -0,29 V.

Avant que les électrodes 124, 126 ne soient reliées à la charge 128, les réactions de régénération (24) et (17) se produisent. De ce fait, dans la solution 122, on observe la formation d'ascorbate $AH_2$ selon la réaction (24). Par conséquent, la concentration de d'ascorbate $AH_2$ augmente au cours du temps. Le rapport entre la concentration de déhydroascorbate A et d'ascorbate $AH_2$ tend alors à diminuer, ce qui fait diminuer le potentiel redox du couple $A/AH_2$ (cf. équation (8)). En outre, dans la solution 120, l'enzyme peroxydase consomme de l'eau oxygénée et de l'hydroquinone selon la réaction (17). Par conséquent, la concentration d'hydroquinone $QH_2$ diminue au cours du temps. Le rapport entre la concentration de benzoquinone Q et l'hydroquinone $QH_2$ tend alors à augmenter, ce qui fait augmenter le potentiel redox du couple $Q/QH_2$ (cf. équation (6)). On crée donc une différence de potentiels entre le couple $Q/QH_2$ et le couple $A/AH_2$ uniquement en jouant sur les concentrations des formes oxydées ou réduites des couples redox. Cette différence de potentiels créée en influant sur le rapport de concentrations s'ajoute à la différence de potentiels due à la différence des potentiels standards des couples redox $Q/QH_2$ et $A/AH_2$.

Lorsque les électrodes 124 et 122 sont reliées à la charge 128, la réaction (14) de réduction de la benzoquinone tend alors à se produire dans la solution 120 et la réaction (23) d'oxydation de $AH_2$ tend alors à se produire dans la solution 122. Parallèlement, les réactions de régénération (24) et (17) se produisent qui renouvellent les espèces chimiques.

Des exemples d'applications vont maintenant être décrits pour lesquels l'utilisation de la biopile selon la présente invention est particulièrement avantageuse.

La biopile est particulière adaptée à une implantation dans le corps humain. Dans ce cas, l'enceinte 12 peut correspondre à une membrane souple, par exemple du type utilisé pour les opérations de dialyse.

La biopile peut correspondre à une source d'alimentation pour un système électronique portable, tel qu'un téléphone portable, un baladeur, un appareil photo ou un caméscope. Le système électronique peut comprendre une source d'alimentation principale classique adaptée à fournir une puissance importante, et une biopile, utilisée comme source d'alimentation secondaire. La biopile peut alors être utilisée pour assurer l'alimentation du système électronique dans un mode de fonctionnement dans lequel le système électronique nécessite seulement une consommation réduite. Ceci correspond, par exemple, au mode de veille d'un téléphone portable pour lequel l'écran du téléphone est généralement éteint.

La biopile peut être intégrée à un support quelconque, le fonctionnement de la biopile étant initié lorsque le support est au contact d'un solvant contenant les éléments nécessaires pour que s'effectuent les réactions entraînant une variation de pH. A titre d'exemple, la biopile selon l'invention peut être intégrée à un papier ou à un tissu. Le fonctionnement de la biopile peut alors être initié au contact de la sueur d'un individu.

Des modes de réalisation particuliers de la présente invention ont été décrits. Diverses variantes et modifications apparaîtront à l'homme de l'art. En particulier, une biopile selon l'invention pourrait comprendre certains éléments de l'un des exemples de réalisation décrits précédemment et d'autres éléments d'un autre exemple parmi les exemples de réalisation décrits précédemment. A titre d'exemple, un exemple de réalisation de biopile selon l'invention pourrait comprendre une cathode ayant la même structure que la cathode de la biopile représentée en figure 9 et une anode ayant la même structure que l'anode représentée en figure 1.

## Revendications

**1.** Pile (10 ; 90) comprenant :

des première et seconde chambres (14A, 14B) contenant un solvant et séparées par une paroi (16 ; 98) perméable au solvant et qui empêche ou ralentit le passage des ions hydronium et/ou hydroxyle ;
une première électrode (18A) disposée au moins en partie dans la première chambre ;
une seconde électrode (18B) disposée au moins en partie dans la seconde chambre ;
un premier couple redox disposé dans la première chambre au contact du solvant et comprenant un premier oxydant et un premier réducteur participant à des premières réactions d'oxydoréduction conduisant à l'échange d'électrons avec la première électrode ;
un second couple redox disposé dans la seconde chambre au contact du solvant et comprenant un second oxydant et un second réducteur participant à des deuxièmes réactions d'oxydoréduction conduisant à l'échange d'électrons avec la seconde électrode, ladite paroi étant imperméable aux premier et second couples redox ; et des premières enzymes ou des premiers microorganismes disposés dans la première chambre ou dans la seconde chambre et favorisant des troisièmes réactions d'oxydoréduction différentes des premières et deuxièmes réactions d'oxydoréduction conduisant à la transformation d'une première substance pour fournir une

seconde substance comprenant des espèces acides ou basiques, d'où il résulte une variation du pH et une variation consécutive du potentiel redox.

2. Pile selon la revendication 1, dans laquelle le premier oxydant est une quinone et dans laquelle le premier réducteur est une forme réduite de ladite quinone.

3. Pile selon la revendication 1 ou 2, dans laquelle la première substance est le D-glucose et dans laquelle les premières enzymes sont les enzymes glucose oxydase adaptées à entraîner la production d'ions hydronium par oxydation du D-glucose.

4. Pile selon la revendication 1 ou 2, dans laquelle la première substance est le L-glucose et dans laquelle les premières enzymes sont les enzymes L-fucose déshydrogénase adaptées à entraîner la production d'ions hydronium par oxydation du L-glucose.

5. Pile selon la revendication 1 ou 2, dans laquelle la première substance est l'urée et dans laquelle les premières enzymes sont les enzymes uréase adaptées à entraîner la production d'ions hydroxyle par dégradation de l'urée.

6. Pile selon l'une quelconque des revendications précédentes, dans laquelle les premier et second couples redox sont identiques.

7. Pile selon l'une quelconque des revendications précédentes, dans laquelle la première chambre (14A) comprend une membrane (20A) perméable au solvant, non perméable aux premières enzymes ou aux premiers microorganismes et délimitant un volume du solvant (19A) dans lequel est plongée la première électrode (18A), le premier couple redox étant dissous dans ledit volume, les premières enzymes ou les premiers microorganismes étant disposés à l'extérieur dudit volume.

8. Pile selon l'une quelconque des revendications précédentes, dans laquelle le premier couple redox est disposé au niveau d'une phase solide ou gélifiée (72A) entourant au moins partiellement la première électrode (18A).

9. Pile selon l'une quelconque des revendications précédentes, dans laquelle le premier dispositif (20A, 22A ; 42C ; 62C) de variation du pH dans la première chambre (14A) comprend les premières enzymes ou les premiers microorganismes adaptés à transformer la première substance pour fournir dans le solvant de la première chambre des ions hydronium, la pile comprenant un deuxième dispositif (20B, 22B ; 42D ; 62D) de variation du pH dans la seconde chambre (14B) comprenant des deuxièmes enzymes ou des deuxièmes microorganismes adaptés à transformer une troisième substance pour fournir dans le solvant de la seconde chambre des ions hydroxyle.

10. Pile selon la revendication 9, comprenant :

un troisième dispositif (42E ; 62E) de variation du pH dans la première chambre (14A) comprenant des troisièmes enzymes ou des troisièmes microorganismes, éventuellement identiques aux deuxièmes enzymes ou aux deuxièmes microorganismes, adaptés à transformer une quatrième substance, éventuellement identique à la troisième substance, pour fournir dans le solvant de la première chambre des ions hydroxyle ;
un quatrième dispositif (42F ; 62F) de variation du pH dans la seconde chambre (14B) comprenant des quatrième enzymes ou des quatrièmes microorganismes, éventuellement identiques aux premières enzymes ou aux premiers microorganismes, adaptés à transformer une cinquième substance, éventuellement identique à la première substance, pour fournir dans le solvant de la seconde chambre des ions hydronium ; et
un dispositif adapté à actionner les premier et deuxième dispositifs tout en bloquant les troisième et quatrième dispositifs et à actionner les troisième et quatrième dispositifs tout en bloquant les premier et deuxième dispositifs.

11. Pile selon l'une quelconque des revendications 1 à 9, comportant un dispositif de régénération du premier oxydant ou du premier réducteur comprenant des cinquièmes enzymes ou des cinquièmes microorganismes adaptés, dans le cas où les premières réactions comprennent la réduction du premier oxydant en le premier réducteur, à transformer le premier réducteur en le premier oxydant et, dans le cas où les premières réactions comprennent l'oxydation du premier réducteur en le premier oxydant, à transformer le premier oxydant en le premier réducteur.

12. Pile selon les revendications 1 et 11, dans laquelle les cinquièmes enzymes sont des enzymes du type tyrosinase ou peroxydase adaptées à favoriser l'oxydation de la forme réduite de ladite quinone en ladite quinone avec consommation de dioxygène ou d'eau oxygénée.

**13.** Pile selon l'une quelconque des revendications 1 à 9, comprenant un passage (38) reliant la première chambre (14A) à la seconde chambre (14B), le passage étant muni d'une vanne (39) à ouverture commandable.

**14.** Pile selon l'une quelconque des revendications 1 à 9, comprenant des sixièmes enzymes ou des sixièmes microorganismes adaptés, dans le cas où les premières réactions comprennent la réduction du premier oxydant en le premier réducteur, à transformer le premier réducteur en le premier oxydant avec consommation de la deuxième substance, et, dans le cas où les premières réactions comprennent l'oxydation du premier réducteur en le premier oxydant, à transformer le premier oxydant en le premier réducteur avec consommation de la seconde substance.

**15.** Pile selon la revendication 14, dans laquelle le premier oxydant est l'ubiquinone et le premier réducteur est l'ubiquinol, la première substance étant le glucose et la deuxième substance étant l'eau oxygénée, les premières enzymes étant les enzymes glucose oxydase adaptées à entraîner la production d'eau oxygénée à partir du glucose, et dans laquelle le second oxydant est une quinone et le second réducteur est une forme réduite de ladite quinone, les sixièmes enzymes correspondant aux enzymes peroxydase adaptées à oxyder la forme réduite de ladite quinone en ladite quinone avec consommation d'eau oxygénée.

**16.** Pile selon la revendication 14, dans laquelle le premier oxydant est le déhydroascorbate et le premier réducteur est l'ascorbate, la première substance étant le glucose et la deuxième substance étant l'eau oxygénée, les premières enzymes étant les enzymes glucose oxydase adaptées à entraîner la production d'eau oxygénée à partir du glucose, et dans laquelle le second oxydant est une quinone et le second réducteur est une forme réduite de ladite quinone, les sixièmes enzymes correspondant aux enzymes peroxydase adaptées à oxyder la forme réduite de ladite quinone en ladite quinone avec consommation d'eau oxygénée.

## Patentansprüche

**1.** Zelle (10; 90), die folgendes aufweist:

erste und zweite Kammern (14A, 14B), die ein Lösungsmittel enthalten und durch eine Wand (16; 98) getrennt werden, welche für das Lösungsmittel durchlässig ist, und für Hydronium- bzw. Oxonium-Ionen und/oder Hydroxyl-Ionen undurchlässig ist;
eine erste Elektrode (18A), die zumindest teilweise in der ersten Kammer angeordnet ist;
eine zweite Elektrode (18B), die zumindest teilweise in der zweiten Kammer angeordnet ist;
ein erstes Redox-Paar, das in der ersten Kammer in Kontakt mit dem Lösungsmittel angeordnet ist und ein erstes Oxidationsmittel und ein erstes Reduktionsmittel aufweist, welche in ersten Oxidation-Reduktion-Reaktionen teilnehmen, welche einen Elektronenaustausch mit der ersten Elektrode zur Folge haben;
ein zweites Redox-Paar, das in der zweiten Kammer in Kontakt mit dem Lösungsmittel angeordnet ist und ein zweites Oxidationsmittel und ein zweites Reduktionsmittel aufweist, welche in zweiten Oxidation-Reduktion-Reaktionen teilnehmen, welche einen Elektronenaustausch mit der zweiten Elektrode zur Folge haben, wobei die Wand für die ersten und
zweiten Redox-Paare undurchlässig ist; und
erste Enzyme oder erste Mikroorganismen, die in der ersten Kammer oder
in der zweiten Kammer angeordnet sind und dritte Oxidation-Reduktion-Reaktionen begünstigen, welche sich von den ersten und zweiten Oxidation-Reduktion-Reaktionen unterscheiden, was die Umwandlung einer ersten Substanz zur Folge hat um eine zweite Substanz vorzusehen, die saure oder alkaline Stoffe aufweist, was eine pH-Veränderung und eine nachfolgende Veränderung des Redoxpotentials zur Folge hat.

**2.** Zelle nach Anspruch 1, wobei das erste Oxidationsmittel ein Chinon ist, und wobei das erste Reduktionsmittel eine reduzierte Form des Chinons ist.

**3.** Zelle nach Anspruch 1 oder 2, wobei die erste Substanz eine D-Glukose ist, und wobei die ersten Enzyme Glukoseoxidaseenzyme sind, welche fähig sind, die Erzeugung von Hydronium-Ionen durch Oxidation der D-Glukose zu bewirken.

**4.** Zelle nach Anspruch 1 oder 2, wobei die erste Substanz L-Glukose ist, und wobei die ersten Enzyme L-Fucosedehydrogenaseenzyme sind, welche die Erzeugung von Hydronium-Ionen durch Oxidation der L-Glukose bewirken können.

**5.** Zelle nach Anspruch 1 oder 2, wobei die erste Substanz Harnstoff ist, und wobei die ersten Enzyme Ureaseenzyme sind, welche die Erzeugung von Hdroxyl-Ionen durch Degradierung bzw. Zersetzung des Harnstoffes bewirken können.

**6.** Zelle nach einem der vorhergehenden Ansprüche, wobei die ersten und zweiten Redox-Paare identisch sind.

**7.** Zelle nach einem der vorhergehenden Ansprüche, wobei die erste Kammer (14A) einen Membran (20A) aufweist, die für das Lösungsmittel durchlässig ist, die für die ersten Enzyme oder die ersten Mikroorganismen nicht durchlässig ist, und die ein Lösungsmittelvolumen (19A) umgrenzt, in dem die erste Elektrode (18A) eingetaucht ist, wobei das erste Redox-Paar in dem Volumen gelöst ist, wobei die ersten Enzyme oder die ersten Mikroorganismen außerhalb des Volumens angeordnet sind.

**8.** Zelle nach einem der vorhergehenden Ansprüche, wobei das erste Redox-Paar auf dem Niveau eines Feststoffes oder einer Gel-Phase (72A) angeordnet ist, der bzw. die teilweise die erste Elektrode (18A) umgibt.

**9.** Zelle nach einem der vorhergehenden Ansprüche, wobei die erste Vorrichtung (20A, 22A; 42C; 62C) zum Variieren des pH-Wertes in der ersten Kammer (14A), die ersten Enzyme oder die ersten Mikroorganismen aufweist, welche fähig sind, die erste Substanz umzuwandeln, um Hydronium-Ionen in dem Lösungsmittel der ersten Kammer vorzusehen, wobei die Zelle eine zweite Vorrichtung (20B, 22B; 42D; 62D) zum Variieren des pH-Wertes in der zweiten Kammer (14B) aufweist, welche zweite Enzyme oder zweite Mikroorganismen aufweist, welche eine dritte Substanz umwandeln können, um Hydroxyl-Ionen in dem Lösungsmittel der zweiten Kammer vorzusehen.

**10.** Zelle nach Anspruch 9, die folgendes aufweist:

eine dritte Vorrichtung (42E; 62E) zum Variieren des pH-Wertes in der ersten Kammer (14A), welche dritte Enzyme oder dritte Mikroorganismen aufweist, die möglicherweise identisch mit den zweiten Enzymen oder den zweiten Mikroorganismen sind, die eine vierte Substanz, welche möglicherweise identisch mit der dritten Substanz ist, umwandeln können, um Hydroxyl-Ionen in dem Lösungsmittel der ersten Kammer vorzusehen;
eine vierte Vorrichtung (42F; 62F) zum Variieren des pH-Wertes in der zweiten Kammer (14B), welche vierte Enzyme oder vierte Mikroorganismen aufweist, die möglicherweise identisch mit den ersten Enzymen oder den ersten Mikroorganismen sind, welche eine fünfte Substanz, welche möglicherweise identisch mit der ersten Substanz ist,
umwandeln können, um Hydronium-Ionen in dem Lösungsmittel der zweiten Kammer vorzusehen; und
eine Vorrichtung, die fähig ist, die ersten und zweiten Vorrichtungen zu betätigen, während die dritten und vierten Vorrichtungen blockiert werden und die fähig ist, die dritten und vierten Vorrichtungen zu betätigen, während die ersten und zweiten Vorrichtungen blockiert werden.

**11.** Zelle nach einem der Ansprüche 1 bis 9, die eine Vorrichtung zum Regenerieren des ersten Oxidationsmittels oder des ersten Reduktionsmittels aufweist, welche fünfte Enzyme oder fünfte Mikroorganismen aufweist, welche in dem Fall, wo die ersten Reaktionen die Reduktion des ersten Oxidationsmittels in das erste Reduktionsmittel aufweisen, das erste Reduktionsmittel in das erste Oxidationsmittel umwandeln können, und in dem Fall, wo die erste Reaktionen die Oxidation des ersten Reduktionsmittels in das erste Oxidationsmittel aufweisen, das erste Oxidationsmittel in das erste Reduktionsmittel umwandeln können.

**12.** Zelle nach Anspruch 1 und 11, wobei die fünften Enzyme Tyrosinase- oder Peroxidaseenzyme sind, welche fähig sein, die Oxidation der reduzierten Form des Chinons in das Chinon zu begünstigen, und zwar mit Verbrauch von molekularem Sauerstoff oder Wasserstoffperoxyd.

**13.** Zelle nach einem der Ansprüche 1 bis 9, die einen Durchlassweg (38) aufweist, der die erste Kammer (14A) mit der zweiten Kammer (14B) verbindet, wobei der Durchlassweg mit einem Ventil (39) versehen ist, welches so gesteuert werden kann, dass es geöffnet wird.

**14.** Zelle nach einem der Ansprüche 1 bis 9, welche sechste Enzyme oder sechste Mikroorganismen aufweist, welche in dem Fall, wo die ersten Reaktionen die Reduktion des ersten Oxidationsmittels in das erste Reduktionsmittel aufweisen, das erste Reduktionsmittel unter Verbrauch der zweiten Substanz in das erste Oxidationsmittel umwandeln können, und welche in dem Fall, wo die ersten Reaktionen die Oxidation des ersten Reduktionsmittels in das erste Oxidationsmittel aufweisen, das erste Oxidationsmittel unter Verbrauch der zweiten Substanz in das erste Reduktionsmittel umwandeln können.

**15.** Zelle nach Anspruch 14, wobei das erste Oxidationsmittel Ubichinon ist, und wobei das erste Reduktionsmittel Ubichinol ist, wobei die erste Substanz Glukose ist, und die zweite Substanz Wasserstoffperoxyd ist, wobei die ersten Enzyme Glukoseoxidaseenzyme sind, welche die Produktion von Wasserstoffperoxyd aus Glukose bewirken können, und wobei das zweite Oxidationsmittel ein Chinon ist, und wobei das zweite Reduktionsmittel eine reduzierte Form des Chinons ist, wobei die sechsten Enzyme Peroxidaseenzymen entsprechen, welche die reduzierte Form des Chinons unter Verbrauch von Wasserstoffperoxyd in Chinon oxidieren können.

**16.** Zelle nach Anspruch 14, wobei das erste Oxidationsmittel Dehydroascorbat ist, und wobei das erste Reduktionsmittel Ascorbat ist, und wobei die erste Substanz Glukose ist und die zweite Substanz Wasserstoffperoxyd ist, wobei die ersten Enzyme Glukoseoxidaseenzyme sind, welche die Erzeugung von Wasserstoffperoxyd aus Glukose bewirken können, und wobei das zweite Oxidationsmittel ein Chinon ist, und das zweite Reduktionsmittel eine reduzierte Form des Chinons ist, wobei die sechsten Enzyme Peroxidaseenzymen entsprechen, welche die reduzierte Form des Chinons unter Verbrauch von Wasserstoffperoxyd in Chinon oxidieren können.

## Claims

**1.** A cell (10; 90) comprising:

first and second chambers (14A, 14B) containing a solvent and separated by a wall (16; 98) permeable to the solvent and which prevents or slows down the passage of hydronium and/or hydroxyl ions;
a first electrode (18A) at least partly arranged in the first chamber;
a second electrode (18B) at least partly arranged in the second chamber;
a first redox couple placed in the first chamber in contact with the solvent and comprising a first oxidizer and a first reducer taking part in first oxidation-reduction reactions resulting in an electron exchange with the first electrode;
a second redox couple placed in the second chamber in contact with the solvent and comprising a second oxidizer and a second reducer taking part in second oxidation-reduction reactions resulting in an electron exchange with the second electrode, said wall being impermeable to the first and second redox couples; and
first enzymes or first microorganisms placed in the first chamber or in the second chamber and promoting third oxidation-reduction reactions different from the first and second oxidation-reduction reactions resulting in the transformation of a first substance to provide a second substance comprising acid or alkaline species, which results in a pH variation and in a consecutive variation of the redox potential.

**2.** The cell of claim 1, wherein the first oxidizer is a quinone and wherein the first reducer is a reduced form of said quinone.

**3.** The cell of claim 1 or 2, wherein the first substance is D-glucose and wherein the first enzymes are glucose oxidase enzymes capable of causing the production of hydronium ions by oxidation of the D-glucose.

**4.** The cell of claim 1 or 2, wherein the first substance is L-glucose and wherein the first enzymes are L-fucose dehydrogenase enzymes capable of causing the production of hydronium ions by oxidation of the L-glucose.

**5.** The cell of claim 1 or 2, wherein the first substance is urea and wherein the first enzymes are urease enzymes capable of causing the production of hydroxyl ions by degradation of the urea.

**6.** The cell of any of the foregoing claims, wherein the first and second redox couples are identical.

**7.** The cell of any of the foregoing claims, wherein the first chamber (14A) comprises a membrane (20A) permeable to the solvent, non-permeable to the first enzymes or to the first microorganisms, and delimiting a solvent volume (19A) in which the first electrode (18A) is plunged, the first redox couple being dissolved in said volume, the first enzymes or the first microorganisms being placed outside of said volume.

**8.** The cell of any of the foregoing claims, wherein the first redox couple is placed at the level of a solid or gel phase (72A) at least partially surrounding the first electrode (18A).

**9.** The cell of any of the foregoing claims, wherein the first device (20A, 22A; 42C; 62C) for varying the pH in the first chamber (14A) comprises the first enzymes or the first microorganisms capable of transforming the first substance

to provide hydronium ions in the solvent of the first chamber, the cell comprising a second device (20B, 22B; 42D; 62D) for varying the pH in the second chamber (14B) comprising second enzymes or second microorganisms capable of transforming a third substance to provide hydroxyl ions in the solvent of the second chamber.

**10.** The cell of claim 9, comprising:

a third device (42E; 62E) for varying the pH in the first chamber (14A) comprising third enzymes or third microorganisms, possibly identical to the second enzymes or to the second microorganisms, capable of transforming a fourth substance, possibly identical to the third substance, to provide hydroxyl ions in the solvent of the first chamber;
a fourth device (42F; 62F) for varying the pH in the second chamber (14B) comprising fourth enzymes or fourth microorganisms, possibly identical to the first enzymes or to the first microorganisms, capable of transforming a fifth substance, possibly identical to the first substance, to provide hydronium ions in the solvent of the second chamber; and
a device capable of actuating the first and second devices while blocking the third and fourth devices and of actuating the third and fourth devices while blocking the first and second devices.

**11.** The cell of any of claims 1 to 9, comprising a device for regenerating the first oxidizer or the first reducer comprising fifth enzymes or fifth microorganisms capable, in the case where the first reactions comprise the reduction of the first oxidizer into the first reducer, of transforming the first reducer into the first oxidizer and, in the case where the first reactions comprise the oxidation of the first reducer into the first oxidizer, of transforming the first oxidizer into the first reducer.

**12.** The cell of claims 1 and 11, wherein the fifth enzymes are tyrosinase- or peroxidase-type enzymes capable of promoting the oxidation of the reduced form of said quinone into said quinone with a consumption of dioxygen or of hydrogen peroxide.

**13.** The cell of any of claims 1 to 9, comprising a pathway (38) connecting the first chamber (14A) to the second chamber (14B), the pathway being provided with a valve (39) that can be controlled to be opened.

**14.** The cell of any of claims 1 to 9, comprising sixth enzymes or sixth microorganisms capable, in the case where the first reactions comprise the reduction of the first oxidizer into the first reducer, of transforming the first reducer into the first oxidizer with a consumption of the second substance and, in the case where the first reactions comprise the oxidation of the first reducer into the first oxidizer, of transforming the first oxidizer into the first reducer with a consumption of the second substance.

**15.** The cell of claim 14, wherein the first oxidizer is ubiquinone and the first reducer is ubiquinol, the first substance being glucose and the second substance being hydrogen peroxide, the first enzymes being glucose oxidase enzymes capable of causing the production of hydrogen peroxide from glucose, and wherein the second oxidizer is a quinone and the second reducer is a reduced form of said quinone, the sixth enzymes corresponding to peroxidase enzymes capable of oxidizing the reduced form of said quinone into said quinone with a consumption of hydrogen peroxide.

**16.** The cell of claim 14, wherein the first oxidizer is dehydroascorbate and the first reducer is ascorbate, the first substance being glucose and the second substance being hydrogen peroxide, the first enzymes being glucose oxidase enzymes capable of causing the production of hydrogen peroxide from glucose, and wherein the second oxidizer is a quinone and the second reducer is a reduced form of said quinone, the sixth enzymes corresponding to peroxidase enzymes capable of oxidizing the reduced form of said quinone into said quinone with a consumption of hydrogen peroxide.

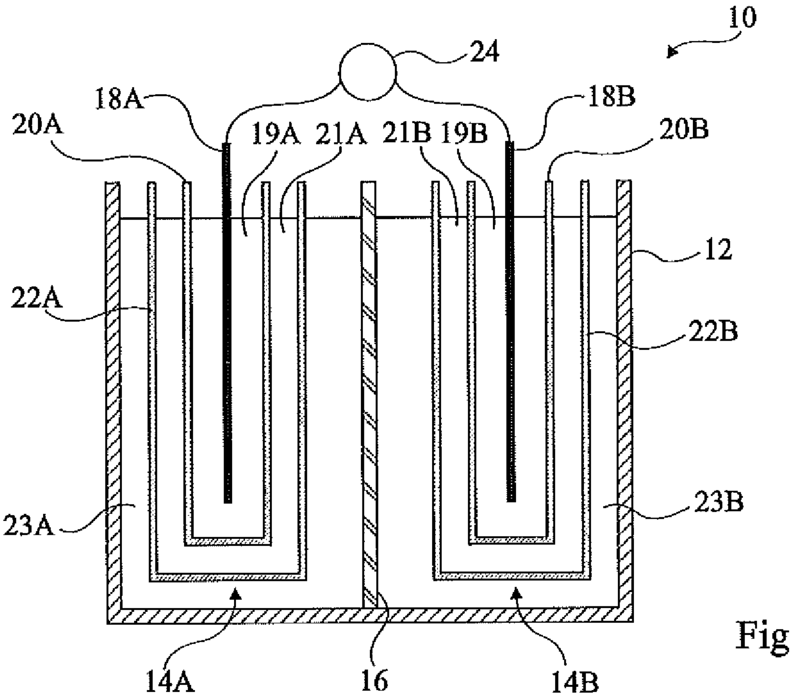
10
24
18A
18B
20A
19A
21A
21B
19B
20B
12
22A
22B
23A
23B
14A
16
14B

Fig 1

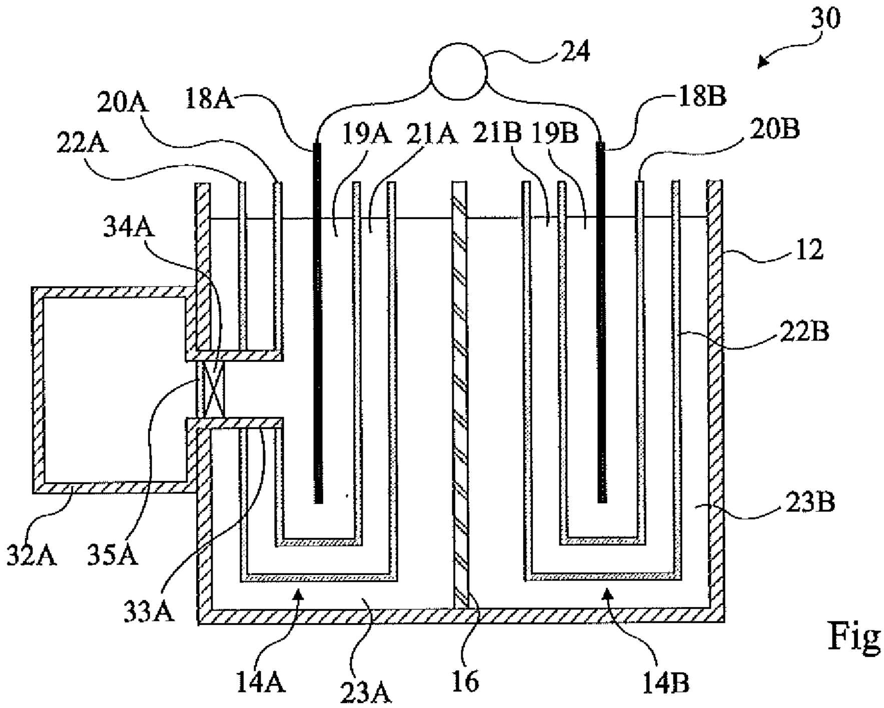
30
24
20A
18A
18B
22A
19A
21A
21B
19B
20B
34A
12
22B
23B
32A
35A
33A
14A
23A
16
14B

Fig 2

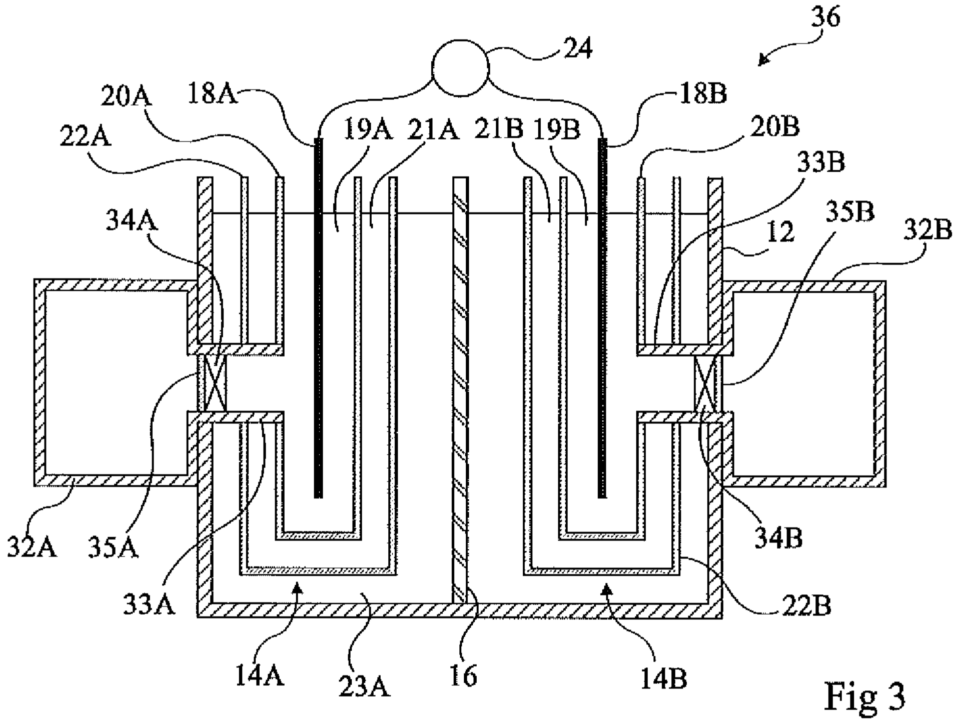
36
24
18A
18B
20A
22A
19A 21A 21B 19B
20B
33B
34A
35B
32B
12
32A
35A
33A
34B
22B
14A
23A
16
14B
Fig 3

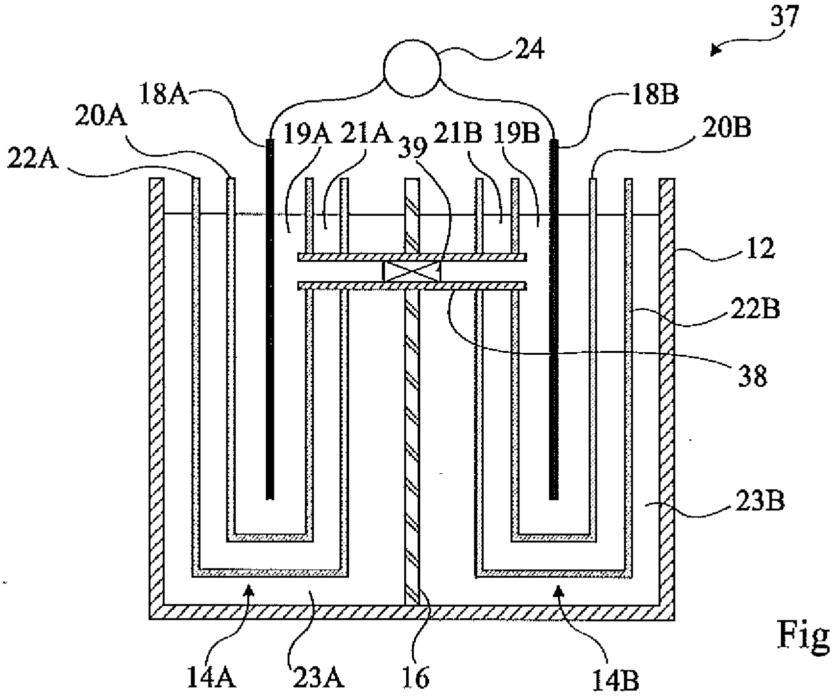
37
24
18A
18B
20A
22A
19A 21A 39 21B 19B
20B
12
22B
38
23B
14A
23A
16
14B
Fig 4

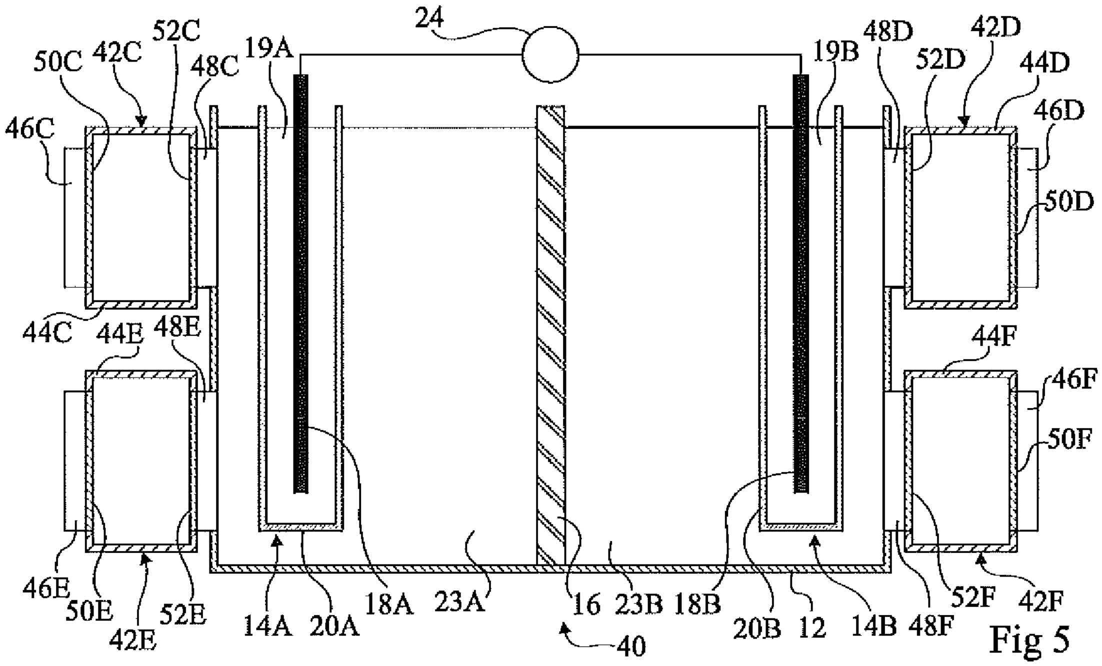


Fig 5

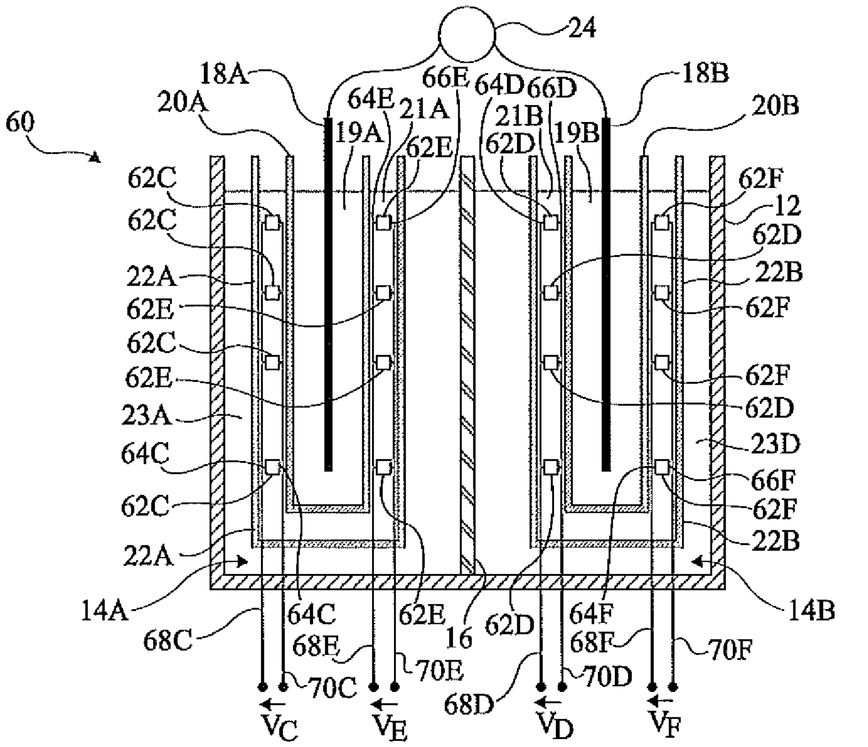


Fig 6

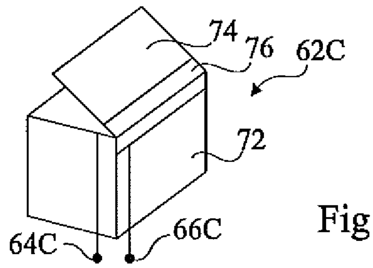


Fig 7

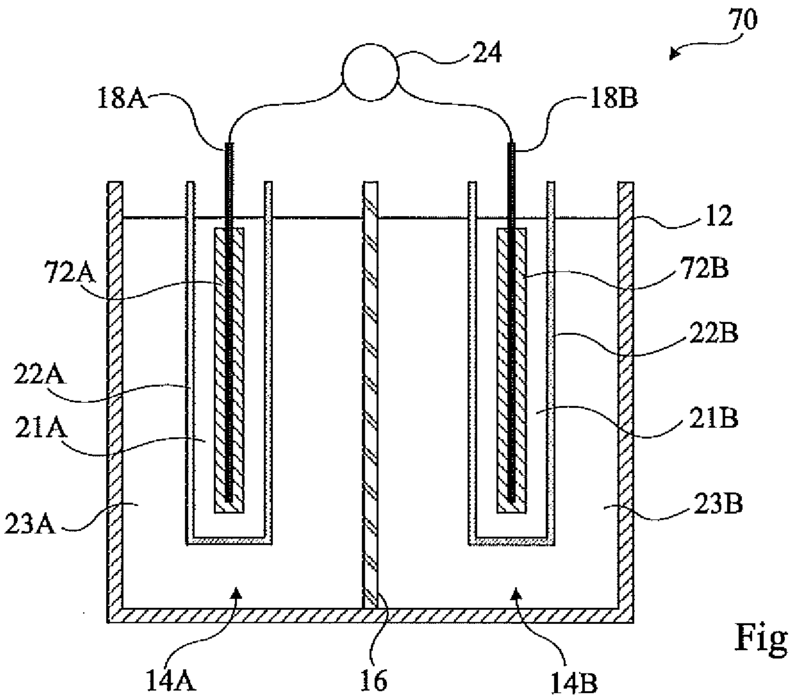
70
24
18A
18B
12
72A
72B
22B
22A
21A
21B
23A
23B
14A
16
14B

Fig 8

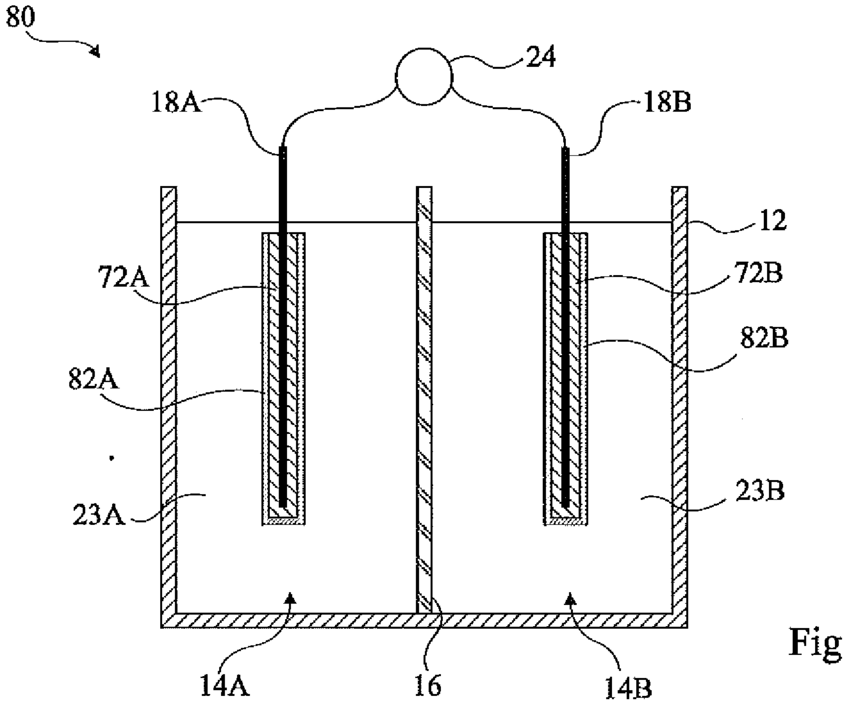
80
24
18A
18B
12
72A
72B
82B
82A
23A
23B
14A
16
14B

Fig 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

• WO 03106966 A

### Littérature non-brevet citée dans la description

• **L. BRUNEL ; J. DENELE ; K. SERVAT ; K. B. KOKOH ; C. JOLIVALT ; C. INNOCENT ; M. CRETIN ; M. ROLLAND ; S. TINGRY.** *Electrochemistry Communications,* 2007, vol. 9, 331-336